# EUROPEAN PATENT SPECIFICATION

(11) **EP 4 593 431 B1**
(45) Date of publication and mention of the grant of the patent: **28.10.2026**
(21) Application number: 22959034.4
(22) Date of filing: 20.09.2022
(51) Int. Cl.: H04W 4/06, H04W 72/20, H04W 72/23, H04W 72/231, H04W 72/232

(54) **INFORMATION RECEIVING METHOD AND APPARATUS, INFORMATION SENDING METHOD AND APPARATUS, AND STORAGE MEDIUM**
INFORMATIONSEMPFANGSVERFAHREN UND -VORRICHTUNG, INFORMATIONSSENDEVERFAHREN UND -VORRICHTUNG UND SPEICHERMEDIUM
PROCÉDÉ ET APPAREIL DE RÉCEPTION D'INFORMATIONS, PROCÉDÉ ET APPAREIL D'ENVOI D'INFORMATIONS ET SUPPORT D'ENREGISTREMENT

(43) Date of publication of application: 30.07.2025
(73) Proprietor: Beijing Xiaomi Mobile Software Co., Ltd., Beijing 100085 (CN)
(72) Inventor: LIU, Xiaofei, Beijing 100085 (CN); WU, Yumin, Beijing 100085 (CN)
(74) Representative: Dehns Germany Partnerschaft mbB
(86) International application number: PCT/CN2022/119969
(87) International publication number: WO 2024/060022

(56) References cited:
- WO-A1-2022/073246
- WO-A1-2022/085757
- CN-A- 113 873 643
- CN-A- 114 071 741
- CN-A- 114 389 744
- KR-A- 20220 051 887
- US-A1- 2022 248 184
- US-A1- 2023 247 401
- US-A1- 2023 262 423
- CMCC, HUAWEI: "38.300 Running CR for MBS in NR", 3GPP DRAFT; R2-2102503, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic Meeting; 20210125 - 20210205, 4 March 2021 (2021-03-04), Mobile Competence Centre ; 650, route des Lucioles ; F-06921 Sophia-Antipolis Cedex ; France , XP051982444

## Description

### TECHNICAL FIELD

The present disclosure relates to the field of communication, and in particular to an information receiving method and apparatus, an information sending method and apparatus, and a storage medium.

### BACKGROUND

The multicast service is only for terminals in the connected state. The network side device can send the multicast service reception configuration to the terminal through the dedicated signaling. When the terminal enters an inactive state, the configuration of the multicast service for a connected state and the related multicast broadcast service radio bearer (MRB) will be suspended, so that the multicast service reception cannot be continued.

In Release 18 (R18), support for reception of multicast service for an inactive state is studied. When the terminal is in an inactive state, multicast service data reception can also be continued. This requires the network side device to send updated multicast service configurations to inactive terminals.

In related technologies, multicast service configurations for inactive terminals, also referred to as multicast service configurations for an inactive state subsequently, can be sent through the multicast/broadcast services control channel (MBS Control Channel, MCCH). However, since the MCCH lacks encryption and integrity protection, it may be attacked. Therefore, the multicast service configuration for an inactive state received by the terminal may be sent by an illegal network side device through MCCH, and its configuration may be tampered, resulting in a high probability of configuration failure (configuration conflict, failure to recognize new configuration, etc.) when the terminal combines the stored configuration with the configuration sent by the illegal network side device, and there is no corresponding error handling for this situation currently. A communication method and apparatus are disclosed in WO2022073246A1. A communication control method used in a mobile communication system is disclosed in CN114666829A.

### SUMMARY

The invention is set out in the appended set of claims. In order to overcome the problems existing in the related art, embodiments of the present disclosure provide an information receiving method and apparatus, an information sending method and apparatus, and a storage medium.

According to the first aspect of the present invention, there is provided an information receiving method, performed by a terminal, as defined in claim 1.

Optionally, the first configuration information includes multicast service configuration information; and/or
the second configuration information includes multicast service configuration information.

Optionally, receiving first configuration information sent by the network side device includes:
receiving the first configuration information sent by the network side device through a first signaling;
wherein receiving second configuration information sent by the network side device includes:
receiving the second configuration information sent by the network side device through a second signaling;
wherein a type of the second signaling is different from a type of the first signaling.

Optionally, the first signaling is a public signaling, and the second signaling is a dedicated signaling; or
the first signaling is a dedicated signaling and the second signaling is a public signaling.

Optionally, the public signaling includes at least one of the following:
a system information block SIB message;
a multicast/broadcast services control channel MCCH.

Optionally, the dedicated signaling includes at least one of the following:
a radio resource control RRC release message;
an RRC reconfiguration message.

Optionally, the RRC release message carries suspension configuration information.

Optionally, multicast service configuration information sent by the network side device through a public signaling includes multicast service configuration information for an inactive state; and/or
multicast service configuration information sent by the network side device through a dedicated signaling includes at least one of multicast service configuration information for an inactive state and multicast service configuration information for a connected state.

Optionally, the method further includes:
receiving indication information sent by the network side device; wherein the indication information is used to indicate the network side device configuring the second configuration information by using the full configuration manner.

Optionally, the method further includes:
determining that the second configuration information adopts the full configuration manner based on protocol agreement.

According to the second aspect of the present invention, there is provided an information sending method, performed by a network device, as defined in claim 8.

Optionally, the first configuration information includes multicast service configuration information; and/or
the second configuration information includes multicast service configuration information.

Optionally, sending the first configuration information to the terminal includes:
sending the first configuration information to the terminal through a first signaling;
wherein sending the second configuration information to the terminal includes:
sending the second configuration information to the terminal through a second signaling;
wherein a type of the second signaling is different from a type of the first signaling.

Optionally, the first signaling is a public signaling, and the second signaling is a dedicated signaling; or
the first signaling is a dedicated signaling and the second signaling is a public signaling.

Optionally, the public signaling includes at least one of the following:
a system information block SIB message;
a multicast/broadcast services control channel MCCH.

Optionally, the dedicated signaling includes at least one of the following:
a radio resource control RRC release message;
an RRC reconfiguration message.

Optionally, the RRC release message carries suspension configuration information.

Optionally, multicast service configuration information sent by the network side device through a public signaling includes multicast service configuration information for an inactive state; and/or
multicast service configuration information sent by the network side device through a dedicated signaling includes at least one of multicast service configuration information for an inactive state and multicast service configuration information for a connected state.

Optionally, the method further includes:
sending indication information to the terminal; wherein the indication information is used to indicate the network side device configuring the second configuration information by using the full configuration manner.

According to the third aspect of the present invention, there is provided an information receiving apparatus, applied to a terminal, and the apparatus including:
a first receiving module, configured to receive first configuration information sent by a network device; and
a second receiving module, configured to receive second configuration information sent by the network device, wherein the second configuration information adopts a full configuration manner.

According to the fourth aspect of the present invention, there is provided an information sending apparatus, applied to a network device, and the apparatus including:
a first sending module, configured to send first configuration information to a terminal; and
a second sending module, configured to send second configuration information to the terminal; wherein the second configuration information adopts a full configuration manner.

Also disclosed is a computer-readable storage medium, wherein the storage medium stores a computer program, and the computer program is used to execute any one of the information receiving methods described in the terminal side.

Also disclosed is a computer-readable storage medium, wherein the storage medium stores a computer program, and the computer program is used to execute any one of the information sending methods described in the network device side.

Also disclosed is an information receiving apparatus, including:
a processor; and
a memory for storing instructions executable by the processor;
wherein the processor is configured to execute any one of the information receiving methods described in the terminal side.

Also disclosed is an information sending apparatus, including:
a processor;
a memory for storing processor-executable instructions;
wherein the processor is configured to execute any one of the information sending methods described in the network device side.

The technical solution provided by embodiments of the present disclosure may include following beneficial effects.

In the present disclosure, the terminal may receive the first configuration information sent by the network side device, and then, with the first configuration information stored, receive the second configuration information sent by the network side device. The second configuration information is configured in a full configuration manner, thereby avoiding the problem of configuration failure occurring when a terminal combines stored configurations with configurations sent by an illegal network side device, and can also avoid the problem of connections and configurations being lost due to a terminal failing to perform reconstruction and entering an idle state, thereby improving the security and reliability of sending configuration information.

It should be understood that the above general description and the detailed description below are only exemplary and explanatory, and cannot limit the present disclosure.

### BRIEF DESCRIPTION OF THE DRAWINGS

The accompanying drawings herein are incorporated into the specification and constitute a part of the specification, showing embodiments consistent with the present disclosure, and are used together with the specification to explain the principles of the present disclosure.
FIG. 1 is a flowchart of a method for receiving and sending information according to an example embodiment.
FIG. 2 is a diagram of a system architecture of receiving and sending information according to an example embodiment.
FIG. 3 is a flowchart of an information receiving method according to an example embodiment.
FIG. 4 is a flowchart of an information receiving method according to another example embodiment.
FIG. 5A is a flowchart of an information receiving method according to another example embodiment.
FIG. 5B is a flowchart of an information receiving method according to another example embodiment.
FIG. 6 is a flowchart of an information sending method according to an example embodiment.
FIG. 7 is a flowchart of an information sending method according to another example embodiment.
FIG. 8A is a flowchart of an information sending method according to another example embodiment.
FIG. 8B is a flowchart of an information sending method according to another example embodiment.
FIG. 9 is a flowchart of a method for sending and receiving information according to an example embodiment.
FIG. 10 is a block diagram of an information receiving apparatus according to an example embodiment.
FIG. 11 is a block diagram of an information sending apparatus according to an example embodiment.
FIG. 12 is a schematic diagram of a structure of an information receiving apparatus according to an example embodiment of the present disclosure.
FIG. 13 is a schematic diagram of a structure of an information sending apparatus according to an example embodiment of the present disclosure.

### DETAILED DESCRIPTION

The example embodiments will be described in detail here, and examples thereof are shown in the accompanying drawings. When the following description refers to the drawings, unless otherwise indicated, the same numbers in different drawings represent the same or similar elements. The implementations described in the following example embodiments do not represent all implementations consistent with the present disclosure. Instead, they are only examples of apparatuses and methods consistent with some aspects of the present disclosure as detailed in the attached claims.

The terms used in the present disclosure are only for the purpose of describing specific embodiments and are not intended to limit the present disclosure. The singular forms "one", "said" and "the" used in the present disclosure and the attached claims are also intended to include the plural forms unless the context clearly indicates otherwise. It should also be understood that the term "and/or" used herein refers to and includes any or all possible combinations of at least one associated listed item.

It should be understood that although the terms first, second, third, etc. may be used in the present disclosure to describe various information, these information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if" as used herein may be interpreted as "at..." or "when..." or "in response to determining that".

Before introducing the solution provided by the present disclosure, terms involved in the present application and the process of the terminal receiving the configuration information sent by a network device, also referred to herein as the network side device, are introduced.

In the 5th Generation Mobile Communication Technology (5G) New Radio (NR) system, the Multicast/Broadcast Services (MBS) can be marked by the following MBS service identifiers:
Temporary Mobile Group Identity (TMGI);
MBS Session ID;
MBS QoS flow ID.

There are two sending modes for the MBS service:
Sending mode 1 (multicast sending, or multicasting sending): the UE enters the RRC connected state (RRC_CONNECTED) to receive the receiving configuration information of the MBS service, so that it can receive the MBS service. The network side device sends the receiving configuration information of the MBS service to the terminal through the dedicated signaling for the terminal.

Sending mode 2 (broadcast sending): the terminal can receive the receiving configuration information of the MBS service in the idle state (IDLE), or inactive state (INACTIVE) or active state (CONNECTED), and receive the MBS service. The network side device sends the receiving configuration information of the MBS service to the terminal through system information and MBS control channel information.

It can be seen that, the multicast service is only for the connected terminal. The network side device sends the multicast service receiving configuration to the terminal through the dedicated signaling. When the terminal enters the inactive state, the configuration of the multicast service for a connected state and the related MBS radio bearer MRB will be suspended, so that the multicast service reception cannot continue.

In current research, there are several manners to provide multicast service configuration information for an inactive state:
Manner 1: send it through the dedicated signaling;
Manner 2: send it through the public signaling (such as the broadcast signaling).

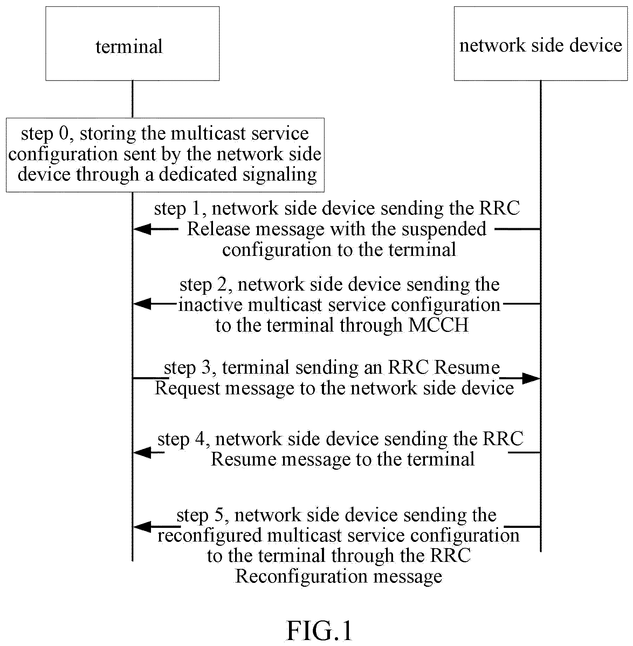

For the manner of sending in the form of broadcast signaling, that is, for manner 2, the flowchart of the terminal receiving the multicast service configuration information for an inactive state sent by the network side device can be shown in FIG. 1, including the following steps:
step 0, when the terminal is in the connected state, it stores the multicast service configuration sent by the network side device (such as a base station, or an access network device, etc.) through a dedicated signaling;
step 1, the terminal receives the RRC Release message with the suspended configuration sent by the network side device, and is released to the inactive state;
step 2, the terminal receives the multicast service configuration for an inactive state sent by the network side device through MCCH;
step 3, the terminal sends an RRC Resume Request message to the network side device;
step 4, the terminal receives the RRC Resume message sent by the network side device;
step 5, the terminal receives the reconfigured multicast service configuration sent by the network side device through the RRC Reconfiguration message.

It should be noted that, since MCCH has no encryption and integrity protection mechanism, the multicast service configuration for an inactive state sent by the network side device through MCCH in the above step 2 may be attacked. In other words, the multicast service configuration for an inactive state received by the terminal may be sent by an illegal network side device through MCCH, and its content may be tampered by an illegal network side device.

In some examples, MCCH adopts an incremental configuration manner. Then, when the terminal receives the multicast service configuration sent by the network side device through MCCH, the terminal combines the multicast service configuration (that is, the configuration stored in the above step 1, which is the correct configuration) sent by the previous legal network side device through the dedicated signaling with the multicast service configuration (which is an incorrect configuration) sent by the illegal network side device through MCCH, which is very likely to cause configuration conflicts, failure to recognize new configuration, etc., resulting in configuration failure. However, no corresponding information is received for such configuration failure scenarios.

In some examples, assuming that the multicast service configuration sent by the network side device through the RRC reconfiguration message also adopts incremental configuration, according to the relevant mechanism, the terminal will combine the stored multicast service configuration (that is, the configuration stored in step 3 above, which is an incorrect configuration) sent by the illegal network side device through MCCH and the multicast service configuration (that is, the configuration stored in step 5 above, which is the correct configuration) sent by the legal network side device through the RRC reconfiguration message, which is very likely to cause configuration conflicts, failure to recognize new configuration, etc., resulting in configuration failure. In this case, the RRC reconfiguration failure process in the relevant mechanism can be used, that is, the terminal will continue to use the stored configuration sent by the illegal network side device through MCCH, and trigger RRC reconstruction, and then enter the IDLE state due to the reconstruction failure, causing the terminal to lose all connections and configurations, and the terminal cost is high.

It can be seen that there are serious security issues for the multicast service configuration manner provided by the public signaling (or broadcast signaling), mainly because that the network side device uses incremental configuration to configure multicast service reception.

In order to solve the above technical problems, the present disclosure provides the following information receiving and information sending methods and apparatuses, and storage media.

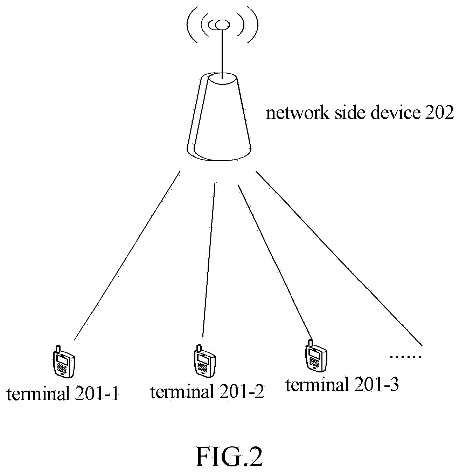

Before introducing the solution provided by the present disclosure, the network architecture diagram applicable to the solution of the present disclosure is first introduced. As shown in FIG. 2, the network in the present disclosure can be 4G, 5G or future 6G, etc., and the present disclosure does not limit this. The network architecture includes:
the terminal 201 (the terminal 201 in FIG. 2 includes at least one of 201-1, 201-2, and 201-3. The terminal can be a smart phone, a desktop, a laptop, a personal assistant (ipad), etc., and the present disclosure does not limit this;
the network side device 202, including but not limited to a base station, an access network device, or the like. The base station may be a 4G base station, a 5G base station or a future 6G base station, and the access network device may be a 4G access network device, a 5G access network device or a future 6G access network device, etc., and the present disclosure does not limit this.

The following first introduces the information receiving method provided by the present disclosure from the terminal side.

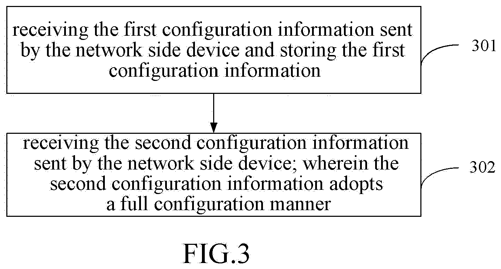

The embodiments of the present disclosure provide an information receiving method, as shown in FIG. 3, FIG. 3 is a flow chart of an information receiving method according to an embodiment, which can be executed by a terminal, and the terminal may be a smart phone, a desktop, a laptop, a personal assistant, etc., and the present disclosure does not limit this. The method may include the following steps.

In step 301, the first configuration information sent by the network side device is received and the first configuration information is stored.

In the embodiments of the present disclosure, the network side device includes but is not limited to a base station, an access network device, etc., wherein the base station may be a 4G base station, a 5G base station or a future 6G base station, and the access network device may be a 4G access network device, a 5G access network device or a future 6G access network device, etc.

In an implementation, the first configuration information may include but is not limited to multicast service configuration information.

In an implementation, when the terminal is in a connected state (also called an active state), an idle state or an inactive state, the terminal can receive first configuration information sent by a network side device, wherein the first configuration information may include multicast service configuration information.

In an implementation, when the terminal is in a connected state (also called an active state), an idle state or an inactive state, the terminal receives first configuration information sent by a network side device through the dedicated signaling, wherein the first configuration information may include multicast service configuration information. Optionally, the dedicated signaling may be the unicast signaling.

In an example, the dedicated signaling may be, for example, a Radio Resource Control (RRC) release message or an RRC reconfiguration message.

In an example, the RRC release message may carry suspension configuration information. It should be noted that the suspension configuration information is different from the first configuration information. The suspension configuration information is used to configure the terminal to suspend the RRC connection with the network side device.

In an implementation, when the terminal is in a connected state (also called an active state), an idle state or an inactive state, the terminal receives first configuration information sent by a network side device through the dedicated signaling, wherein the first configuration information may include multicast service configuration information. Optionally, the dedicated signaling may be the unicast signaling.

The first configuration information may include but is not limited to multicast service configuration information for an inactive state and multicast service configuration information for a connected state.

In other possible implementations, when the terminal is in a connected state (also called an active state), an idle state or an inactive state, the first configuration information sent by the network side device through the public signaling may be received. Optionally, the public signaling may be the broadcast signaling.

In an example, the public signaling may be, for example, a system information block (SIB) message; a multicast/broadcast services control channel MCCH.

In an implementation, when the terminal is in a connected state (also called an active state), an idle state or an inactive state, the first configuration information sent by the network side device through the public signaling is received, wherein the first configuration information may include multicast service configuration information. In an implementation, when the terminal is in a connected state (also called an active state), an idle state or an inactive state, the first configuration information sent by the network side device through the public signaling is received, wherein the public signaling may be, for example, at least one of the SIB message and MCCH.

In an implementation, when the terminal is in a connected state (also called an active state), an idle state or an inactive state, the terminal receives the first configuration information sent by the network side device through the public signaling, wherein the public signaling may be, for example, at least one of the SIB message and MCCH.

The first configuration information may include, but is not limited to, multicast service configuration information for an inactive state.

In step 302, the second configuration information sent by the network side device is received; wherein the second configuration information adopts a full configuration manner.

In an implementation, the second configuration information may include, but is not limited to, multicast service configuration information. In an example, the second configuration information is used to update the configuration information used by the terminal.

In the embodiment of the present disclosure, the second configuration information adopts a full configuration manner.

In the embodiment of the present disclosure, the full configuration manner specifically refers to that the network side device configures all the involved information contents for the information that needs to be configured.

It should be noted that the incremental configuration manner corresponds to the full configuration manner. The incremental configuration manner refers to that the network side device configures the update part based on the configured information. The update includes addition, deletion, modification, etc.

The full configuration manner can be used to indicate that the terminal clears the previously stored first configuration information in response to receiving the second configuration information. Alternatively, the full configuration manner can be used to indicate that the terminal ignores or skips the first configuration information in response to receiving the second configuration information.

The present disclosure does not limit the specific information content included in the first configuration information, that is, regardless of whether the first configuration information includes multicast service configuration, the terminal can clear, ignore or skip the first configuration information when receiving the second configuration information.

The network side device can adopt the full configuration manner for the configuration information of a plurality of services, including but not limited to multicast services, unicast services, etc. Correspondingly, for the terminal storing the first configuration information, when receiving the second configuration information sent by the network side device, it can be processed according to the full configuration processing procedure, that is, the previously stored first configuration information can be cleared, and then the second configuration information can be used to receive the corresponding service data. The full configuration manner can be used to indicate that the terminal clears the multicast service configuration information in the first configuration information in response to receiving the second configuration information. Alternatively, the full configuration manner may be used to indicate that the terminal ignores or skips the multicast service configuration information in the first configuration information in response to receiving the second configuration information.

If the first configuration information does not include the multicast service configuration information, it is not necessary to perform operations of clearing, ignoring, or skipping on the first configuration information.

The network side device can adopt the full configuration manner only for the multicast service configuration information. Correspondingly, for the terminal storing the first configuration information including the multicast service configuration information, when receiving the second configuration information including the multicast service configuration information sent by the network side device, only the multicast service configuration information in the first configuration information previously stored can be cleared, and other service configuration information in the first configuration information can be retained, such as retaining the unicast service configuration information, and then the multicast service configuration information included in the second configuration information can be used to receive the multicast service data. The multicast service configuration information included in the second configuration information is the complete multicast service configuration information updated by the network side device.

In another possible implementation, the full configuration manner can be used to indicate that the terminal clears the multicast service configuration information for an inactive state in the first configuration information in response to receiving the second configuration information. Alternatively, the full configuration manner can be used to indicate that the terminal ignores or skips the multicast service configuration information for an inactive state in the first configuration information in response to receiving the second configuration information.

If the first configuration information does not include the multicast service configuration information for an inactive state, it is not necessary to perform operations of clearing, ignoring, or skipping on the first configuration information.

The network side device can adopt the full configuration manner only for the multicast service configuration information for an inactive state. Correspondingly, for the terminal storing the first configuration information including the multicast service configuration information, when receiving the second configuration information including the multicast service configuration information for an inactive state sent by the network side device, the multicast service configuration information for an inactive state in the first configuration information previously stored can be cleared, and other service configuration information in the first configuration information can be retained, such as retaining the unicast service configuration information and the multicast service configuration information for a connected state or the like, and then when the terminal enters the inactive state, the multicast service configuration information for an inactive state included in the second configuration information is used to receive the multicast service data. The multicast service configuration information for an inactive state included in the second configuration information is the complete multicast service configuration information for the inactive terminal after being updated by the network side device.

In an implementation, when the terminal is in the connected state (also called an active state), the idle state or the inactive state, the second configuration information sent by the network side device is received, wherein the second configuration information carries the multicast service configuration information.

In an implementation, when the terminal is in a connected state (also called an active state), an idle state or an inactive state, the second configuration information sent by the network side device through the public signaling is received, wherein the second configuration information carries the multicast service configuration information.

In one implementation, the public signaling may be, for example, at least one of the SIB message and MCCH.

In other possible implementations, when the terminal is in a connected state (also called an active state), an idle state or an inactive state, the second configuration information sent by the network side device through the dedicated signaling is received.

In one example, the dedicated signaling may be, for example, an RRC release message or an RRC reconfiguration message.

In one example, the RRC release message may carry the suspension configuration information. It should be noted that the suspension configuration information is different from the second configuration information. The suspension configuration information is used to configure the terminal to suspend the RRC connection with the network side device.

It should be noted that the type of the second signaling may be different from the type of the first signaling. That is, when the first signaling adopts the public signaling, the second signaling is the dedicated signaling, and when the first signaling adopts the dedicated signaling, the second signaling is the public signaling. The type of the second signaling may also be the same as the type of the first signaling, for example, both the second signaling and the first signaling are dedicated signalings or public signalings, which is not limited in the present disclosure.

In the above embodiments, it may avoid the problem of configuration failure occurring when a terminal combines stored configurations with configurations sent by an illegal network side device, and can also avoid the problem of connections and configurations being lost due to a terminal failing to perform reconstruction and entering an idle state, thereby improving the security and reliability of sending configuration information.

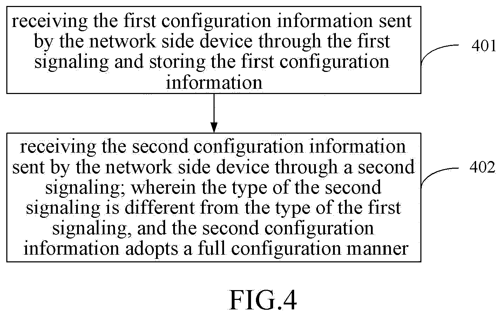

In some embodiments, as shown in FIG. 4, FIG. 4 is a flow chart of an information receiving method according to an embodiment, which can be executed by a terminal, and the terminal can be a smart phone, a desktop, a laptop, a personal assistant, etc., which is not limited in the present disclosure. The method may include the following steps.

In step 401, the first configuration information sent by the network side device through the first signaling is received and the first configuration information is stored.

In the embodiments of the present disclosure, the network side device includes but is not limited to a base station, an access network device, etc., wherein the base station may be a 4G base station, a 5G base station or a future 6G base station, and the access network device may be a 4G access network device, a 5G access network device or a future 6G access network device, etc.

In an implementation, the first configuration information may include but is not limited to multicast service configuration information.

In an implementation, the first signaling may be the public signaling, or the first signaling may be the dedicated signaling.

The public signaling may be the broadcast signaling, including but not limited to at least one of the following: SIB message; multicast/broadcast services control channel MCCH.

The dedicated signaling refers to the signaling dedicated to the terminal, such as the unicast signaling. The dedicated signaling may include but is not limited to at least one of the following: radio resource control RRC release message; RRC reconfiguration message.

In one example, the RRC release message may carry suspension configuration information. It should be noted that the suspension configuration information is different from the first configuration information. The suspension configuration information is used to configure the terminal to suspend the RRC connection with the network side device.

In the embodiment of the present disclosure, the terminal receives the first configuration information sent by the network side device through the public signaling, such as SIB message and/or MCCH, and the terminal stores the first configuration information.

Alternatively, the terminal receives the first configuration information sent by the network side device through the dedicated signaling, such as a radio resource control RRC release message and/or an RRC reconfiguration message, and the terminal can store the first configuration information.

In an implementation, when the terminal is in a connected state (also called an active state), an idle state or an inactive state, the terminal can receive the first configuration information sent by the network side device, wherein the first configuration information may include multicast service configuration information.

In an implementation, when the terminal is in a connected state (also called an active state), an idle state or an inactive state, the terminal receives the first configuration information sent by the network side device through the dedicated signaling, wherein the first configuration information may include multicast service configuration information. Optionally, the dedicated signaling may be the unicast signaling.

In an example, the dedicated signaling may be, for example, a radio resource control (RRC) release message or an RRC reconfiguration message.

In an example, the RRC release message may carry suspension configuration information. It should be noted that the suspension configuration information is different from the first configuration information. The suspension configuration information is used to configure the terminal to suspend the RRC connection with the network side device.

In an implementation, when the terminal is in a connected state (also called an active state), an idle state or an inactive state, the terminal receives first configuration information sent by a network side device through the dedicated signaling, wherein the first configuration information may include multicast service configuration information. Optionally, the dedicated signaling may be the unicast signaling.

The first configuration information may include but is not limited to multicast service configuration information for an inactive state and multicast service configuration information for a connected state.

In other possible implementations, when the terminal is in a connected state (also called an active state), an idle state or an inactive state, the terminal may receive first configuration information sent by a network side device through the public signaling. Optionally, the public signaling may be the broadcast signaling.

In an example, the public signaling may be, for example, a system information block (SIB) message; a multicast/broadcast services control channel MCCH.

In an implementation, when the terminal is in a connected state (also called an active state), an idle state or an inactive state, the terminal receives first configuration information sent by a network side device through a public signaling, wherein the first configuration information may include multicast service configuration information. In an implementation, when the terminal is in a connected state (also called an active state), an idle state or an inactive state, the first configuration information sent by the network side device through the public signaling is received, wherein the public signaling may be, for example, at least one of the SIB message and MCCH.

In an implementation, when the terminal is in a connected state (also called an active state), an idle state or an inactive state, the first configuration information sent by the network side device through the public signaling is received, wherein the public signaling may be, for example, at least one of the SIB message and MCCH.

The first configuration information may include, but is not limited to, multicast service configuration information for an inactive state. In step 402, the second configuration information sent by the network side device through a second signaling is received; wherein the type of the second signaling is different from the type of the first signaling, and the second configuration information adopts a full configuration manner.

In an implementation, the first signaling may be a public signaling, and correspondingly, the second signaling may be a dedicated signaling.

The public signaling may be a broadcast signaling, including, but not limited to, at least one of the following: the SIB message; MCCH.

The dedicated signaling refers to a signaling dedicated to the terminal, such as a unicast signaling. The dedicated signaling may include but is not limited to at least one of the following: a radio resource control RRC release message; an RRC reconfiguration message.

In an implementation, the terminal is in an inactive state or an idle state, and receives the second configuration information sent by the network side device.

In the embodiment of the present disclosure, the terminal may first receive the second configuration information sent by the network side device through the dedicated signaling, such as a radio resource control RRC release message carrying suspension configuration information and/or an RRC reconfiguration message (corresponding to step 0 shown in FIG. 1), and the first configuration information may include but is not limited to multicast service configuration information, and the terminal stores the first configuration information. Further, the terminal may receive the second configuration information sent by the network side device through the public signaling, such as the SIB message and/or MCCH (corresponding to step 2 shown in FIG. 1), and the second configuration information may include but is not limited to multicast service configuration information, and the second configuration information adopts a full configuration manner.

In the embodiment of the present disclosure, the second configuration information adopts a full configuration manner.

In the embodiment of the present disclosure, the full configuration manner specifically refers to the manner that the network side device configures all the involved information contents for the information that needs to be configured.

It should be noted that the incremental configuration manner corresponds to the full configuration manner. The incremental configuration manner refers to the manner that the network side device configures the update part based on the configured information. The update includes addition, deletion, modification, etc.

In an implementation, the terminal is in a connected state (also called an active state), an idle state, or an inactive state, and receives the second configuration information sent by the network side device. The second configuration information includes: multicast service configuration information.

In an implementation, the full configuration manner can be used to indicate that the terminal clears the previously stored first configuration information in response to receiving the second configuration information. Alternatively, the full configuration manner can be used to indicate that the terminal ignores or skips the first configuration information in response to receiving the second configuration information.

The present disclosure does not limit the specific information content included in the first configuration information, that is, regardless of whether the first configuration information includes multicast service configuration, the terminal can clear, ignore or skip the first configuration information when receiving the second configuration information.

The network side device can adopt the full configuration manner for the configuration information of a plurality of services, including but not limited to multicast services, unicast services, etc. Correspondingly, for the terminal storing the first configuration information, when receiving the second configuration information sent by the network side device, it can be processed according to the full configuration processing procedure, that is, the previously stored first configuration information can be cleared, and then the second configuration information can be used to receive the corresponding service data. In another possible implementation, the full configuration manner can be used to indicate that the terminal clears the multicast service configuration information in the first configuration information in response to receiving the second configuration information. Alternatively, the full configuration manner may be used to indicate that the terminal ignores or skips the multicast service configuration information in the first configuration information in response to receiving the second configuration information.

If the first configuration information does not include the multicast service configuration information, it is not necessary to perform operations of clearing, ignoring, or skipping on the first configuration information.

The network side device can adopt the full configuration manner only for the multicast service configuration information. Correspondingly, for the terminal storing the first configuration information including the multicast service configuration information, when receiving the second configuration information including the multicast service configuration information sent by the network side device, only the multicast service configuration information in the first configuration information previously stored can be cleared, and other service configuration information in the first configuration information can be retained, such as retaining the unicast service configuration information, and then the multicast service configuration information included in the second configuration information can be used to receive the multicast service data. The multicast service configuration information included in the second configuration information is the complete multicast service configuration information updated by the network side device.

The full configuration manner can be used to indicate that the terminal clears the multicast service configuration information for an inactive state in the first configuration information in response to receiving the second configuration information. Alternatively, the full configuration manner can be used to indicate that the terminal ignores or skips the multicast service configuration information for an inactive state in the first configuration information in response to receiving the second configuration information.

If the first configuration information does not include the multicast service configuration information for an inactive state, it is not necessary to perform operations of clearing, ignoring, or skipping on the first configuration information.

The network side device can adopt the full configuration manner only for the multicast service configuration information for an inactive state. Correspondingly, for the terminal storing the first configuration information including the multicast service configuration information, when receiving the second configuration information including the multicast service configuration information for an inactive state sent by the network side device, the multicast service configuration information for an inactive state in the first configuration information previously stored can be cleared, and other service configuration information in the first configuration information can be retained, such as retaining the unicast service configuration information and the multicast service configuration information for a connected state or the like, and then when the terminal enters the inactive state, the multicast service configuration information for an inactive state included in the second configuration information is used to receive the multicast service data. The multicast service configuration information for an inactive state included in the second configuration information is the complete multicast service configuration information for the inactive terminal after being updated by the network side device.

In an implementation, when the terminal is in the connected state (also called an active state), the idle state or the inactive state, the second configuration information sent by the network side device is received, wherein the second configuration information carries the multicast service configuration information.

In an implementation, when the terminal is in a connected state (also called an active state), an idle state or an inactive state, the second configuration information sent by the network side device through the public signaling is received, wherein the second configuration information carries the multicast service configuration information.

In one implementation, the public signaling may be, for example, at least one of the SIB message and MCCH.

In other possible implementations, when the terminal is in a connected state (also called an active state), an idle state or an inactive state, the second configuration information sent by the network side device through the dedicated signaling is received.

In one example, the dedicated signaling may be, for example, an RRC release message or an RRC reconfiguration message.

In one example, the RRC release message may carry the suspension configuration information. It should be noted that the suspension configuration information is different from the second configuration information. The suspension configuration information is used to configure the terminal to suspend the RRC connection with the network side device.

It should be noted that the type of the second signaling may be different from the type of the first signaling. That is, when the first signaling adopts the public signaling, the second signaling is the dedicated signaling, and when the first signaling adopts the dedicated signaling, the second signaling is the public signaling. The type of the second signaling may also be the same as the type of the first signaling, for example, both the second signaling and the first signaling are dedicated signalings or public signalings, which is not limited in the present disclosure.

In the above embodiment, it may effectively avoid the problem of configuration failure occurring when a terminal combines stored configurations with configurations sent by an illegal network side device, and can also effectively avoid the problem of connections and configurations being lost due to a terminal failing to perform reconstruction and entering an idle state, thereby improving the security and reliability of sending configuration information.

In some embodiments, the terminal may first receive the first configuration information sent by the network side device through the public signaling, such as the SIB message and/or MCCH (corresponding to step 2 shown in FIG. 1), and then receive the second configuration information sent by the network side device through the dedicated signaling, such as a radio resource control RRC release message carrying the suspension configuration information and/or RRC reconfiguration message (corresponding to step 5 shown in FIG. 1), and the second configuration information adopts a full configuration manner.

Alternatively, the terminal may first receive the first configuration information sent by the network side device through the dedicated signaling, such as the SIB message and/or MCCH (corresponding to step 2 shown in FIG. 1). Then, the terminal may receive the second configuration information sent by the network side device through the public signaling, such as a radio resource control RRC release message carrying the suspension configuration information and/or an RRC reconfiguration message (corresponding to step 5 shown in FIG. 1), and the second configuration information adopts a full configuration manner.

In the above embodiment, the network side device can use a full configuration manner for the configuration information sent later when the configuration information is sent through the public signaling in combination with the dedicated signaling, which effectively avoids the problem of configuration failure occurring when a terminal combines stored configurations with configurations sent by an illegal network side device, and can also effectively avoid the problem of connections and configurations being lost due to a terminal failing to perform reconstruction and entering an idle state, thereby improving the security and reliability of sending configuration information.

In some embodiments, the terminal can first receive the first configuration information sent by the network side device through the public signaling, such as the SIB message and/or MCCH, and the first configuration information may include but is not limited to multicast service configuration information. Then, the terminal can receive the second configuration information sent by the network side device through the dedicated signaling, such as a radio resource control RRC release message carrying the suspension configuration information and/or an RRC reconfiguration message. The second configuration information adopts a full configuration manner, and the second configuration information may include but is not limited to multicast service configuration information.

Alternatively, the terminal may first receive the first configuration information sent by the network side device through the dedicated signaling, such as the SIB message and/or MCCH, and the first configuration information may include but is not limited to multicast service configuration information. Then, the terminal may receive the second configuration information sent by the network side device through the public signaling, such as a radio resource control RRC release message carrying the suspension configuration information and/or an RRC reconfiguration message. The second configuration information adopts a full configuration manner, and the second configuration information may include but is not limited to multicast service configuration information.

In some embodiments, the multicast service configuration information sent by the network side device through the public signaling received by the terminal may include but is not limited to multicast service configuration information for an inactive state, and the multicast service configuration information sent by the network side device through the dedicated signaling received by the terminal may include at least one of multicast service configuration information for an inactive state and multicast service configuration information for a connected state.

In some embodiments, the terminal may first receive first configuration information sent by the network side device through the public signaling, such as the SIB message and/or MCCH, and the first configuration information may include but is not limited to multicast service configuration information, specifically, it may include multicast service configuration information for an inactive state.

Then, the terminal receives second configuration information sent by the network side device through the dedicated signaling, such as the radio resource control RRC release message carrying suspension configuration information and/or the RRC reconfiguration message, and the second configuration information adopts a full configuration manner, and the second configuration information may include but is not limited to multicast service configuration information, specifically, it may include but is not limited to at least one of multicast service configuration information for an inactive state and multicast service configuration information for a connected state.

In one example, for a terminal storing first configuration information including multicast service configuration information for an inactive state sent through the public signaling, such as the SIB message and/or MCCH, when receiving second configuration information including multicast service configuration information for an inactive state sent by the network side device through the dedicated signaling, such as the RRC release message carrying suspension configuration information and/or RRC reconfiguration message, the full configuration manner is adopted.

Specifically, in response to receiving the second configuration information, the terminal can clear the first configuration information, and when the terminal enters the inactive state, the multicast service configuration information for an inactive state included in the second configuration information is used to receive multicast service data.

Alternatively, in response to receiving the second configuration information, the terminal can clear the multicast service configuration information included in the first configuration information, at this time, the first configuration information only includes the multicast service configuration information for an inactive state, so the terminal can clear the multicast service configuration information for an inactive state included in the first configuration information. When the terminal enters the inactive state, the multicast service configuration information for an inactive state included in the second configuration information is used to receive multicast service data.

Alternatively, in response to receiving the second configuration information, the terminal can directly clear the multicast service configuration information for an inactive state included in the first configuration information, and when the terminal enters the inactive state, the multicast service configuration information for an inactive state included in the second configuration information is used to receive multicast service data.

In another example, for a terminal storing first configuration information including multicast service configuration information for an inactive state sent through the public signaling, such as the SIB message and/or MCCH, when receiving second configuration information including multicast service configuration information for a connected state sent by a network side device through the dedicated signaling, such as the RRC release message carrying suspension configuration information and/or RRC reconfiguration message, the full configuration manner is adopted.

Specifically, in response to receiving the second configuration information, the terminal clears the first configuration information, and when entering the connected state, the terminal uses the multicast service information for a connected state included in the second configuration information to receive multicast service data.

Alternatively, the terminal clears the multicast service configuration information included in the first configuration information in response to receiving the second configuration information, since the multicast service configuration information included in the first configuration information only includes the multicast service configuration information for an inactive state at this time, the terminal clears the multicast service configuration information for an inactive state included in the first configuration information. When the terminal enters the connected state, it uses the multicast service information for a connected state included in the second configuration information to receive multicast service data.

Alternatively, the terminal directly clears the multicast service configuration information for an inactive state included in the first configuration information in response to receiving the second configuration information, when the terminal enters the connected state, it uses the multicast service information for a connected state included in the second configuration information to receive multicast service data.

In another example, for a terminal storing first configuration information including multicast service configuration information for an inactive state sent through the public signaling, such as the SIB message and/or MCCH, when receiving second configuration information including multicast service configuration information for an inactive state and multicast service configuration information for a connected state sent by a network side device through the dedicated signaling, such as the RRC release message carrying suspension configuration information and/or RRC reconfiguration message, the full configuration manner is adopted.

Specifically, the terminal clears the first configuration information in response to receiving the second configuration information, and when the terminal enters the connected state, the terminal uses the multicast service information for a connected state included in the second configuration information to receive multicast service data. When the terminal enters the inactive state, the multicast service information for an inactive state included in the second configuration information is used to receive multicast service data.

Alternatively, the terminal clears the multicast service configuration information included in the first configuration information in response to receiving the second configuration information, since the multicast service configuration information included in the first configuration information only includes the multicast service configuration information for an inactive state at this time, the terminal clears the multicast service configuration information for an inactive state included in the first configuration information. When the terminal enters the connected state, the multicast service information for a connected state included in the second configuration information is used to receive multicast service data. When the terminal enters the inactive state, the multicast service information for an inactive state included in the second configuration information is used to receive multicast service data.

Alternatively, in response to receiving the second configuration information, the terminal directly clears the multicast service configuration information for an inactive state included in the first configuration information, and when the terminal enters the connected state, the terminal uses the multicast service information for a connected state included in the second configuration information to receive multicast service data. When the terminal enters the inactive state, the multicast service information for an inactive state included in the second configuration information is used to receive multicast service data.

In some embodiments, the terminal may first receive the first configuration information sent by the network side device through the dedicated signaling, such as a radio resource control RRC release message carrying the suspension configuration information and/or an RRC reconfiguration message. The first configuration information may include but is not limited to the multicast service configuration information. Specifically, it may include but is not limited to at least one of the multicast service configuration information for an inactive state and the multicast service configuration information for a connected state.

Then, the terminal receives the second configuration information sent by the network side device through the public signaling, such as the SIB message and/or MCCH. The second configuration information adopts a full configuration manner. The second configuration information may include but is not limited to multicast service configuration information, specifically, it may include but is not limited to multicast service configuration information for an inactive state.

In an example, for a terminal storing first configuration information including multicast service configuration information for an inactive state sent through the dedicated signaling, such as the RRC release message carrying suspension configuration information and/or RRC reconfiguration message, when receiving second configuration information including multicast service configuration information for an inactive state sent by the network side device through the public signaling, such as the SIB message and/or MCCH, the full configuration manner is adopted.

Specifically, in response to receiving the second configuration information, the terminal clears the first configuration information, and after the terminal enters the inactive state, the multicast service configuration information for an inactive state included in the second configuration information is used to receive multicast service data.

Alternatively, in response to receiving the second configuration information, the terminal clears the multicast service configuration information included in the first configuration information, at this time, the first configuration information only includes the multicast service configuration information for an inactive state. Therefore, the terminal clears the multicast service configuration information for an inactive state included in the first configuration information, after the terminal enters the inactive state, the multicast service configuration information for an inactive state included in the second configuration information is used to receive multicast service data.

Alternatively, in response to receiving the second configuration information, the terminal directly clears the multicast service configuration information for an inactive state included in the first configuration information, after the terminal enters the inactive state, the multicast service configuration information for an inactive state included in the second configuration information is used to receive multicast service data.

In another example, for a terminal storing the first configuration information including the multicast service configuration for a connected state sent through a dedicated signaling, such as an RRC release message carrying the suspension configuration information and/or an RRC reconfiguration message, when receiving the second configuration information including the multicast service configuration information for an inactive state sent by the network side device through a public signaling, such as the SIB message and/or MCCH, the full configuration manner is adopted.

Specifically, the terminal clears the first configuration information in response to receiving the second configuration information, and after the terminal enters the inactive state, the multicast service configuration information for an inactive state included in the second configuration information is used to receive multicast service data.

Alternatively, the terminal clears the multicast service configuration information included in the first configuration information in response to receiving the second configuration information, at this time, the first configuration information only includes the multicast service configuration information for a connected state, so the terminal clears the multicast service configuration information for a connected state included in the first configuration information, after the terminal enters the inactive state, the multicast service configuration information for an inactive state included in the second configuration information is used to receive multicast service data.

Alternatively, the terminal clears the multicast service configuration information for an inactive state included in the first configuration information in response to receiving the second configuration information, since the first configuration information does not include the multicast service configuration information for an inactive state at this time, the terminal will not clear the first configuration information, further, after the terminal enters the inactive state, the multicast service configuration information for an inactive state included in the second configuration information is used to receive multicast service data.

In another example, for a terminal storing first configuration information including multicast service configuration information for an inactive state and connected state multicast service configuration sent through the dedicated signaling, such as an RRC release message carrying suspension configuration information and/or an RRC reconfiguration message, when receiving second configuration information including multicast service configuration information for an inactive state sent by a network side device through the public signaling, such as an SIB message and/or MCCH, the full configuration manner is adopted.

Specifically, in response to receiving the second configuration information, the terminal clears the first configuration information, and after the terminal enters the inactive state, the multicast service configuration information for an inactive state included in the second configuration information is used to receive multicast service data.

Alternatively, in response to receiving the second configuration information, the terminal clears the multicast service configuration information included in the first configuration information, at this time, the first configuration information includes the multicast service configuration information for an inactive state and the multicast service configuration information for a connected state, therefore, the terminal clears the multicast service configuration information for an inactive state and the multicast service configuration information for a connected state included in the first configuration information, after the terminal enters the inactive state, the multicast service configuration information for an inactive state included in the second configuration information is used to receive multicast service data.

Alternatively, in response to receiving the second configuration information, the terminal clears the multicast service configuration information for an inactive state included in the first configuration information, retains the multicast service configuration information for a connected state in the first configuration information, and further, after the terminal enters the inactive state, the multicast service configuration information for an inactive state included in the second configuration information is used to receive multicast service data.

The above is only an illustrative description. The first configuration information and the second configuration information may include other configuration information, which is not limited by the present disclosure. In addition, other schemes that configure the second configuration information using a full configuration manner should all fall within the protection scope of the present disclosure.

In the above embodiment, it may effectively avoid the problem of configuration failure occurring when a terminal combines stored configurations with configurations sent by an illegal network side device, and can also effectively avoid the problem of connections and configurations being lost due to a terminal failing to perform reconstruction and entering an idle state, thereby improving the security and reliability of sending configuration information.

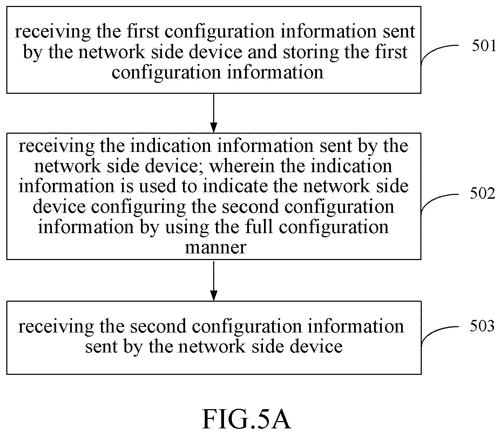

In some embodiments, as shown in FIG. 5A, FIG. 5A is a flow chart of an information receiving method according to an embodiment, which can be executed by a terminal, and the terminal can be a smart phone, a desktop, a laptop, a personal assistant, etc., and the present disclosure does not limit this. The method may include the following steps.

In step 501, the first configuration information sent by the network side device is received and the first configuration information is stored.

In the embodiments of the present disclosure, the network side device includes but is not limited to a base station, an access network device, etc., wherein the base station may be a 4G base station, a 5G base station or a future 6G base station, and the access network device may be a 4G access network device, a 5G access network device or a future 6G access network device, etc.

In an implementation, the first configuration information may include but is not limited to multicast service configuration information.

The specific implementation is similar to step 301 and will not be repeated herein.

In step 502, the indication information sent by the network side device is received; wherein the indication information is used to indicate that the network side device configures the second configuration information by using the full configuration manner.

In an implementation, the network side device may send the indication information to the terminal by setting the full configuration (fullConfig) indicator as true, specifically including:

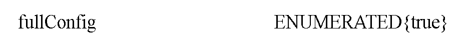

The above is only an illustrative description. In actual applications, the network side device may also send the indication information to the terminal in other manners, and the present disclosure does not limit this.

In the embodiment of the present disclosure, the full configuration manner specifically refers to that the network side device configures all the involved information contents for the information that needs to be configured.

It should be noted that the incremental configuration manner corresponds to the full configuration manner. The incremental configuration manner refers to that the network side device configures the update part based on the configured information. The update includes addition, deletion, modification, etc.

The network side device may also not send the indication information to the terminal, and the terminal defaults that the network side device configures the second configuration information in the full configuration manner at this time. Alternatively, the terminal determines to configure the second configuration information in the full configuration manner based on the protocol agreement.

In step 503, the second configuration information sent by the network side device is received.

The present disclosure does not limit the execution order of step 502 and step 503. They can be executed synchronously, or step 502 can be executed first and then step 503 is executed, or step 503 can be executed first and then step 502 is executed. The present disclosure does not limit this.

In an implementation, step 502 and step 503 can be executed synchronously, that is, the network side device synchronously sends the indication information to the terminal each time it sends the second configuration information to the terminal.

In an implementation, the second configuration information may include, but is not limited to, multicast service configuration information.

In an implementation, the full configuration manner can be used to indicate that the terminal clears, ignores or skips the first configuration information previously stored in response to receiving the second configuration information.

In another possible implementation, the full configuration manner can be used to indicate that the terminal clears, ignores or skips the multicast service configuration information in the first configuration information in response to receiving the second configuration information.

In another possible implementation, the full configuration manner can be used to indicate that the terminal clears, ignores or skips the multicast service configuration information for an inactive state in the first configuration information in response to receiving the second configuration information.

The implementation of step 503 is similar to the above-mentioned step 302 or 402, and will not be described in detail herein.

In the above-mentioned embodiment, the network side device can send indication information to the terminal, so that the terminal can determine that the second configuration information is configured in a full configuration manner according to the indication information, and perform a corresponding clearing operation, thereby improving the security and reliability of sending configuration information.

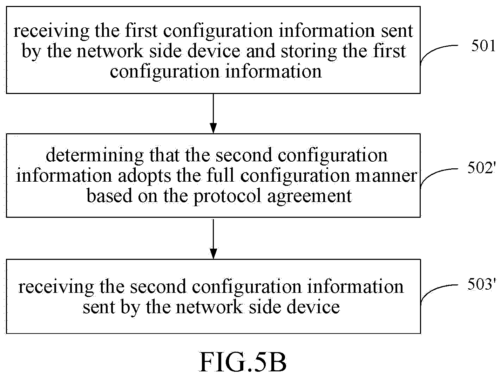

In some embodiments, as shown in FIG. 5B, FIG. 5B is a flow chart of an information receiving method according to an embodiment, which can be executed by a terminal, and the terminal can be a smart phone, a desktop, a laptop, a personal assistant, etc., and the present disclosure does not limit this. The method may include the following steps.

In step 501', the first configuration information sent by the network side device is received and stored.

In the embodiments of the present disclosure, the network side device includes but is not limited to a base station, an access network device, etc., wherein the base station may be a 4G base station, a 5G base station or a future 6G base station, and the access network device may be a 4G access network device, a 5G access network device or a future 6G access network device, etc.

In an implementation, the first configuration information may include but is not limited to multicast service configuration information.

The specific implementation is similar to step 301, and will not be described in detail herein.

In step 502', based on the protocol agreement, it is determined that the second configuration information adopts the full configuration manner.

In step 503', the second configuration information sent by the network side device is received.

It should be noted that the present disclosure does not limit the execution order of the above steps 502' and 503'. That is, the terminal can first determine that the second configuration information adopts the full configuration manner based on the protocol agreement, and then receive the second configuration information sent by the network side device. Alternatively, the terminal first receives the second configuration information sent by the network side device, and determines that the second configuration information adopts the full configuration manner according to the protocol agreement.

It can be understood that when it is determined that the second configuration information adopts the full configuration manner based on the protocol agreement, even if the network side device sends other indication information indicating that the second configuration information adopts the incremental configuration manner, the terminal side should also determine that the second configuration information is configured in the full configuration manner based on the protocol agreement.

In an implementation, even if the network side device sets the full configuration indicator as false, the terminal side should also determine that the second configuration information is configured in the full configuration manner based on the protocol agreement.

The implementation of step 503' is similar to the above step 302 or 402, and will not be repeated herein.

In the above embodiment, the terminal can determine that the second configuration information is configured in a full configuration manner through the protocol agreement, and perform a corresponding clearing operation, thereby improving the security and reliability of sending the configuration information.

The information sending method provided by the present disclosure is introduced from the network side device side in the following.

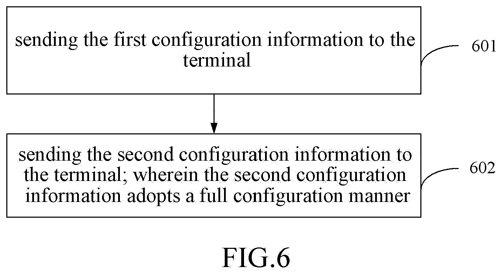

The present disclosure embodiment provides an information receiving method, as shown in FIG. 6, FIG. 6 is a flow chart of an information receiving method shown according to an embodiment, which can be executed by a network side device, and the network side device includes but is not limited to a base station, an access network device, etc., wherein the base station can be a 4G base station, a 5G base station or a future 6G base station, and the access network device can be a 4G access network device, a 5G access network device or a future 6G access network device, etc. The method may include the following steps.

In step 601, the first configuration information is sent to the terminal.

In the embodiment of the present disclosure, the terminal can be a smart phone, a desktop, a laptop, a personal assistant, etc., and the present disclosure does not limit this.

In an implementation, the first configuration information can include but is not limited to multicast service configuration information.

In an implementation, when the terminal is in a connected state (also called an active state), an idle state, or an inactive state, the network side device sends first configuration information to the terminal, wherein the first configuration information may include multicast service configuration information.

In an implementation, when the terminal is in a connected state (also called an active state), an idle state, or an inactive state, the network side device sends the first configuration information through the dedicated signaling, wherein the first configuration information may include multicast service configuration information. Optionally, the dedicated signaling may be the unicast signaling.

In an example, the dedicated signaling may be, for example, a Radio Resource Control (RRC) release message or an RRC reconfiguration message.

In an example, the RRC release message may carry suspension configuration information. It should be noted that the suspension configuration information is different from the first configuration information. The suspension configuration information is used to configure the terminal to suspend the RRC connection with the network side device.

In an implementation, when the terminal is in a connected state (also called an active state), an idle state, or an inactive state, the network side device sends the first configuration information through the dedicated signaling, wherein the first configuration information may include multicast service configuration information. Optionally, the dedicated signaling may be the unicast signaling.

The first configuration information may include but is not limited to multicast service configuration information for an inactive state and multicast service configuration information for a connected state.

In other possible implementations, when the terminal is in a connected state (also called an active state), an idle state, or an inactive state, the network side device sends the first configuration information through the public signaling. Optionally, the public signaling may be a broadcast signaling.

In an example, the public signaling may be, for example, a system information block (SIB) message; a multicast/broadcast services control channel MCCH.

In an implementation, when the terminal is in a connected state (also called an active state), an idle state, or an inactive state, the network side device sends the first configuration information through the public signaling, wherein the first configuration information may include multicast service configuration information.

In an implementation, when the terminal is in a connected state (also called an active state), an idle state, or an inactive state, the network side device sends the first configuration information through the public signaling, wherein the public signaling may be, for example, at least one of the SIB message and MCCH.

The first configuration information may include but is not limited to multicast service configuration information for an inactive state.

In step 602, the second configuration information is sent to the terminal, wherein the second configuration information adopts a full configuration manner.

In an implementation, the second configuration information may include, but is not limited to, multicast service configuration information. In an example, the second configuration information is used to update the configuration information used by the terminal.

In the embodiment of the present disclosure, the second configuration information adopts a full configuration manner.

In the embodiment of the present disclosure, the full configuration manner specifically refers to that the network side device configures all the involved information contents for the information that needs to be configured.

It should be noted that the incremental configuration manner corresponds to the full configuration manner. The incremental configuration manner refers to that the network side device configures the update part based on the configured information. The update includes addition, deletion, modification, etc.

In an implementation, the full configuration manner can be used to indicate that the terminal clears the previously stored first configuration information in response to receiving the second configuration information. Alternatively, the full configuration manner can be used to indicate that the terminal ignores or skips the first configuration information in response to receiving the second configuration information.

The present disclosure does not limit the specific information content included in the first configuration information, that is, regardless of whether the first configuration information includes multicast service configuration, the terminal side can clear, ignore or skip the first configuration information when receiving the second configuration information.

The network side device can adopt a full configuration manner for the configuration information of a plurality of services, including but not limited to multicast services, unicast services, etc. Correspondingly, for the terminal storing the first configuration information, when receiving the second configuration information sent by the network side device, it can be processed according to the full configuration processing procedure in the protocol, that is, the previously stored first configuration information can be cleared, and then the second configuration information can be used to receive the corresponding service data.

In another possible implementation, the full configuration manner can be used to indicate that the terminal clears the multicast service configuration information in the first configuration information in response to receiving the second configuration information. Alternatively, the full configuration manner may be used to indicate that the terminal ignores or skips the multicast service configuration information in the first configuration information in response to receiving the second configuration information.

If the first configuration information does not include multicast service configuration information, the terminal side may not perform operations of clearing, ignoring, or skipping on the first configuration information.

The network side device can adopt the full configuration manner only for the multicast service configuration information. Correspondingly, for the terminal storing the first configuration information including the multicast service configuration information, when receiving the second configuration information including the multicast service configuration information sent by the network side device, only the multicast service configuration information in the first configuration information previously stored can be cleared, and other service configuration information in the first configuration information can be retained, such as retaining the unicast service configuration information, and then the multicast service configuration information included in the second configuration information can be used to receive the multicast service data. The multicast service configuration information included in the second configuration information is the complete multicast service configuration information updated by the network side device.

In another possible implementation, the full configuration manner can be used to indicate that the terminal clears the multicast service configuration information for an inactive state in the first configuration information in response to receiving the second configuration information. Alternatively, the full configuration manner can be used to indicate that the terminal ignores or skips the multicast service configuration information for an inactive state in the first configuration information in response to receiving the second configuration information.

If the first configuration information does not include the multicast service configuration information for an inactive state, the terminal side may not perform the operations of clearing, ignoring or skipping on the first configuration information.

The network side device can adopt the full configuration manner only for the multicast service configuration information for an inactive state. Correspondingly, for the terminal storing the first configuration information including the multicast service configuration information, when receiving the second configuration information including the multicast service configuration information for an inactive state sent by the network side device, the multicast service configuration information for an inactive state in the first configuration information previously stored can be cleared, and other service configuration information in the first configuration information can be retained, such as retaining the unicast service configuration information and the multicast service configuration information for a connected state or the like, and then when the terminal enters the inactive state, the multicast service configuration information for an inactive state included in the second configuration information is used to receive the multicast service data. The multicast service configuration information for an inactive state included in the second configuration information is the complete multicast service configuration information for the inactive terminal after being updated by the network side device.

In an implementation, when the terminal is in the connected state (also called an active state), the idle state or the inactive state, the network side device sends the second configuration information to the terminal, wherein the second configuration information carries the multicast service configuration information.

In an implementation, when the terminal is in a connected state (also called an active state), an idle state, or an inactive state, the network side device sends the second configuration information to the terminal through the public signaling, wherein the second configuration information carries the multicast service configuration information.

In one implementation, the public signaling may be, for example, at least one of the SIB message and MCCH.

In other possible implementations, when the terminal is in a connected state (also called an active state), an idle state, or an inactive state, the network side device sends the second configuration information to the terminal through the dedicated signaling.

In one example, the dedicated signaling may be, for example, an RRC release message or an RRC reconfiguration message.

In one example, the RRC release message may carry the suspension configuration information. It should be noted that the suspension configuration information is different from the second configuration information. The suspension configuration information is used to configure the terminal to suspend the RRC connection with the network side device.

It should be noted that the type of the second signaling may be different from the type of the first signaling. That is, when the first signaling adopts the public signaling, the second signaling is the dedicated signaling, and when the first signaling adopts the dedicated signaling, the second signaling is the public signaling.

The type of the second signaling may also be the same as the type of the first signaling, for example, both the second signaling and the first signaling are dedicated signalings or public signalings, which is not limited in the present disclosure.

In the above embodiment, the network side device sends the second configuration information in a full configuration manner, which avoids the configuration failure caused by sending the second configuration information in an incremental configuration manner, as well as loss of connection and configuration of the terminal, and high cost, thereby improving the security and reliability of sending the configuration information.

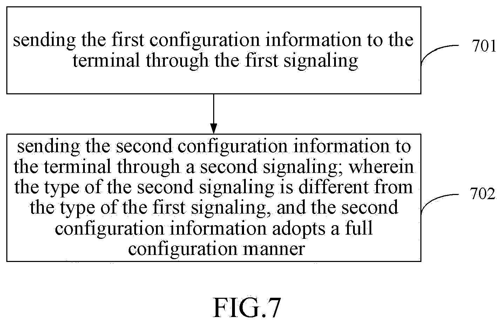

In some embodiments, as shown in FIG. 7, FIG. 7 is a flow chart of an information receiving method according to an embodiment, which can be executed by a network side device, and the network side device includes but is not limited to a base station, an access network device, etc., wherein the base station may be a 4G base station, a 5G base station or a future 6G base station, and the access network device may be a 4G access network device, a 5G access network device or a future 6G access network device, etc. The method may include the following steps.

In step 701, the first configuration information is sent to the terminal through the first signaling.

In the embodiment of the present disclosure, the terminal can be a smart phone, a desktop, a laptop, a personal assistant, etc., which is not limited in the present disclosure.

In an implementation, the first configuration information may include but is not limited to multicast service configuration information.

In an implementation, the first signaling may be a public signaling, or the first signaling may be a dedicated signaling.

The public signaling includes but is not limited to at least one of the following: SIB message; multicast/broadcast services control channel MCCH.

The dedicated signaling refers to the signaling dedicated to the terminal, which is generally a unicast signaling. The dedicated signaling may include but is not limited to at least one of the following: a radio resource control RRC release message carrying the suspension configuration information; an RRC reconfiguration message.

In the embodiment of the present disclosure, the network side device may send the first configuration information to the terminal through the public signaling, such as the SIB message and/or MCCH, so that the terminal stores the first configuration information.

Alternatively, the network side device may send the first configuration information to the terminal through the dedicated signaling, such as a radio resource control RRC release message carrying the suspension configuration information and/or an RRC reconfiguration message, so that the terminal stores the first configuration information.

In an implementation, when the terminal is in a connected state (also called an active state), an idle state, or an inactive state, the network side device sends first configuration information to the terminal, wherein the first configuration information may include multicast service configuration information.

In an implementation, when the terminal is in a connected state (also called an active state), an idle state, or an inactive state, the network side device sends the first configuration information through the dedicated signaling, wherein the first configuration information may include multicast service configuration information. Optionally, the dedicated signaling may be the unicast signaling.

In an example, the dedicated signaling may be, for example, a Radio Resource Control (RRC) release message or an RRC reconfiguration message.

In an example, the RRC release message may carry suspension configuration information. It should be noted that the suspension configuration information is different from the first configuration information. The suspension configuration information is used to configure the terminal to suspend the RRC connection with the network side device.

In an implementation, when the terminal is in a connected state (also called an active state), an idle state, or an inactive state, the network side device sends the first configuration information through the dedicated signaling, wherein the first configuration information may include multicast service configuration information. Optionally, the dedicated signaling may be the unicast signaling.

The first configuration information may include but is not limited to multicast service configuration information for an inactive state and multicast service configuration information for a connected state.

In other possible implementations, when the terminal is in a connected state (also called an active state), an idle state, or an inactive state, the network side device sends the first configuration information through the public signaling. Optionally, the public signaling may be a broadcast signaling.

In an example, the public signaling may be, for example, a system information block (SIB) message; a multicast/broadcast services control channel MCCH.

In an implementation, when the terminal is in a connected state (also called an active state), an idle state, or an inactive state, the network side device sends the first configuration information through the public signaling, wherein the first configuration information may include multicast service configuration information.

In an implementation, when the terminal is in a connected state (also called an active state), an idle state, or an inactive state, the network side device sends the first configuration information through the public signaling, wherein the public signaling may be, for example, at least one of the SIB message and MCCH.

The first configuration information may include but is not limited to multicast service configuration information for an inactive state.

In step 702, the second configuration information is sent to the terminal through a second signaling; wherein the type of the second signaling is different from the type of the first signaling, and the second configuration information adopts a full configuration manner.

In an implementation, the second configuration information may include, but is not limited to, multicast service configuration information. In an example, the second configuration information is used to update the configuration information used by the terminal.

In the embodiment of the present disclosure, the second configuration information adopts a full configuration manner.

In the embodiment of the present disclosure, the full configuration manner specifically refers to that the network side device configures all the involved information contents for the information that needs to be configured.

It should be noted that the incremental configuration manner corresponds to the full configuration manner. The incremental configuration manner refers to that the network side device configures the update part based on the configured information. The update includes addition, deletion, modification, etc.

In an implementation, the first signaling may be a public signaling, and correspondingly, the second signaling may be a dedicated signaling.

The public signaling includes but is not limited to at least one of the following: SIB message; MCCH.

The dedicated signaling refers to the signaling dedicated to the terminal, which is generally a unicast signaling. The dedicated signaling may include but is not limited to at least one of the following: a radio resource control RRC release message carrying the suspension configuration information; an RRC reconfiguration message.

In the embodiment of the present disclosure, the network side device may first send the first configuration information to the terminal through the public signaling, such as the SIB message and/or MCCH (corresponding to step 2 shown in FIG. 1), and the first configuration information may include but is not limited to multicast service configuration information, and the terminal stores the first configuration information. Further, the network side device may send the second configuration information to the terminal through the dedicated signaling, such as a radio resource control RRC release message carrying the suspension configuration information and/or an RRC reconfiguration message (corresponding to step 5 shown in FIG. 1), and the second configuration information may include but is not limited to multicast service configuration information, and the second configuration information adopts a full configuration manner. In an implementation mode, the full configuration manner can be used to indicate that the terminal clears the previously stored first configuration information in response to receiving the second configuration information. Alternatively, the full configuration manner can be used to indicate that the terminal ignores or skips the first configuration information in response to receiving the second configuration information.

The present disclosure does not limit the specific information content included in the first configuration information, that is, regardless of whether the first configuration information includes multicast service configuration, the terminal side can clear, ignore or skip the first configuration information when receiving the second configuration information.

The network side device can adopt a full configuration manner for the configuration information of a plurality of services, including but not limited to multicast services, unicast services, etc. Correspondingly, for a terminal storing the first configuration information, when receiving the second configuration information sent by the network side device, the full configuration processing procedure can be used for processing, that is, the previously stored first configuration information can be cleared, and the second configuration information can be used to receive the corresponding service data.

In another possible implementation, the full configuration manner can be used to indicate that the terminal clears the multicast service configuration information in the first configuration information in response to receiving the second configuration information. Alternatively, the full configuration manner may be used to indicate that the terminal ignores or skips the multicast service configuration information in the first configuration information in response to receiving the second configuration information.

If the first configuration information does not include multicast service configuration information, the terminal side may not perform operations of clearing, ignoring, or skipping on the first configuration information.

The network side device can adopt the full configuration manner only for the multicast service configuration information. Correspondingly, for the terminal storing the first configuration information including the multicast service configuration information, when receiving the second configuration information including the multicast service configuration information sent by the network side device, only the multicast service configuration information in the first configuration information previously stored can be cleared, and other service configuration information in the first configuration information can be retained, such as retaining the unicast service configuration information, and then the multicast service configuration information included in the second configuration information can be used to receive the multicast service data. The multicast service configuration information included in the second configuration information is the complete multicast service configuration information updated by the network side device.

In another possible implementation, the full configuration manner can be used to indicate that the terminal clears the multicast service configuration information for an inactive state in the first configuration information in response to receiving the second configuration information. Alternatively, the full configuration manner can be used to indicate that the terminal ignores or skips the multicast service configuration information for an inactive state in the first configuration information in response to receiving the second configuration information.

If the first configuration information does not include the multicast service configuration information for an inactive state, the terminal side may not perform the operations of clearing, ignoring or skipping on the first configuration information.

The network side device can adopt the full configuration manner only for the multicast service configuration information for an inactive state. Correspondingly, for the terminal storing the first configuration information including the multicast service configuration information, when receiving the second configuration information including the multicast service configuration information for an inactive state sent by the network side device, the multicast service configuration information for an inactive state in the first configuration information previously stored can be cleared, and other service configuration information in the first configuration information can be retained, such as retaining the unicast service configuration information and the multicast service configuration information for a connected state or the like, and then when the terminal enters the inactive state, the multicast service configuration information for an inactive state included in the second configuration information is used to receive the multicast service data. The multicast service configuration information for an inactive state included in the second configuration information is the complete multicast service configuration information for the inactive terminal after being updated by the network side device.

In an implementation, when the terminal is in the connected state (also called an active state), the idle state or the inactive state, the network side device sends the second configuration information to the terminal, wherein the second configuration information carries the multicast service configuration information.

In an implementation, when the terminal is in a connected state (also called an active state), an idle state, or an inactive state, the network side device sends the second configuration information to the terminal through the public signaling, wherein the second configuration information carries the multicast service configuration information.

In one implementation, the public signaling may be, for example, at least one of the SIB message and MCCH.

In other possible implementations, when the terminal is in a connected state (also called an active state), an idle state, or an inactive state, the network side device sends the second configuration information to the terminal through the dedicated signaling.

In one example, the dedicated signaling may be, for example, an RRC release message or an RRC reconfiguration message.

In one example, the RRC release message may carry the suspension configuration information. It should be noted that the suspension configuration information is different from the second configuration information. The suspension configuration information is used to configure the terminal to suspend the RRC connection with the network side device.

It should be noted that the type of the second signaling may be different from the type of the first signaling. That is, when the first signaling adopts the public signaling, the second signaling is the dedicated signaling, and when the first signaling adopts the dedicated signaling, the second signaling is the public signaling.

The type of the second signaling may also be the same as the type of the first signaling, for example, both the second signaling and the first signaling are dedicated signalings or public signalings, which is not limited in the present disclosure.

In the above embodiment, the network side device sends the second configuration information in a full configuration manner, which avoids the configuration failure caused by sending the second configuration information in an incremental configuration manner, as well as loss of connection and configuration of the terminal, and high cost, thereby improving the security and reliability of sending the configuration information.

In some embodiments, the network side device may first send the first configuration information to the terminal through the public signaling, such as the SIB message and/or MCCH (corresponding to step 2 shown in FIG. 1), and then the network side device may send the second configuration information to the terminal through the dedicated signaling, such as a radio resource control RRC release message carrying the suspension configuration information and/or RRC reconfiguration message (corresponding to step 5 shown in FIG. 1), and the second configuration information adopts a full configuration manner.

Alternatively, the network side device may first send the first configuration information through the dedicated signaling, such as the SIB message and/or MCCH (corresponding to step 2 shown in FIG. 1). Then, the second configuration information sent by the network side device to the terminal through the public signaling, such as a radio resource control RRC release message carrying the suspension configuration information and/or an RRC reconfiguration message is received (corresponding to step 5 shown in FIG. 1), and the second configuration information adopts a full configuration manner.

In the above embodiment, the network side device can use a full configuration manner for the configuration information sent later when the configuration information is sent through the public signaling in combination with the dedicated signaling, which effectively avoids the problem of configuration failure occurring when a terminal combines stored configurations with configurations sent by an illegal network side device, and can also effectively avoid the problem of connections and configurations being lost due to a terminal failing to perform reconstruction and entering an idle state, thereby improving the security and reliability of sending configuration information.

In some embodiments, the network side device can first send the first configuration information to the terminal through the public signaling, such as the SIB message and/or MCCH, and the first configuration information may include but is not limited to multicast service configuration information. Then, the network side device can send the second configuration information to the terminal through the dedicated signaling, such as a radio resource control RRC release message carrying suspension configuration information and/or an RRC reconfiguration message. The second configuration information adopts a full configuration manner, and the second configuration information may include but is not limited to multicast service configuration information.

Alternatively, the network side device may send the first configuration information to the terminal through the dedicated signaling, such as the SIB message and/or MCCH, and the first configuration information may include but is not limited to multicast service configuration information. Then the network side device may send the second configuration information to the terminal through the public signaling, such as radio resource control RRC release message carrying suspension configuration information and/or RRC reconfiguration message, and the second configuration information adopts a full configuration manner, and the second configuration information may include but is not limited to multicast service configuration information.

In the above embodiment, the network side device can use a full configuration manner for the multicast service configuration information sent later when the multicast service configuration information is sent through the public signaling in combination with the dedicated signaling, which effectively avoids the problem of configuration failure occurring when a terminal combines stored configurations with multicast service configurations sent by an illegal network side device, and can also effectively avoid the problem of connections and configurations being lost due to a terminal failing to perform reconstruction and entering an idle state, thereby improving the security and reliability of sending multicast service configuration information.

In some embodiments, the multicast service configuration information sent by the network side device to the terminal through the public signaling may include but is not limited to multicast service configuration information for an inactive state, and the multicast service configuration information sent by the network side device to the terminal through the dedicated signaling may include but is not limited to at least one of multicast service configuration information for an inactive state and multicast service configuration information for a connected state.

In some embodiments, the network side device sends first configuration information to the terminal through the public signaling, such as SIB message and/or MCCH, and the first configuration information may include but is not limited to multicast service configuration information, specifically, it may include multicast service configuration information for an inactive state.

Then, the network side device sends second configuration information to the terminal through the dedicated signaling, such as a radio resource control RRC release message carrying suspension configuration information and/or RRC reconfiguration message. The second configuration information adopts a full configuration manner, and the second configuration information may include but is not limited to multicast service configuration information, specifically, it may include but is not limited to at least one of multicast service configuration information for an inactive state and multicast service configuration information for a connected state.

In one example, for a terminal storing first configuration information including multicast service configuration information for an inactive state sent through the public signaling, such as the SIB message and/or MCCH, when receiving second configuration information including multicast service configuration information for an inactive state sent by the network side device through the dedicated signaling, such as the RRC release message carrying suspension configuration information and/or RRC reconfiguration message, the full configuration manner is adopted.

Specifically, in response to receiving the second configuration information, the terminal can clear the first configuration information, and when the terminal enters the inactive state, the multicast service configuration information for an inactive state included in the second configuration information is used to receive multicast service data.

Alternatively, in response to receiving the second configuration information, the terminal can clear the multicast service configuration information included in the first configuration information, at this time, the first configuration information only includes the multicast service configuration information for an inactive state, so the terminal can clear the multicast service configuration information for an inactive state included in the first configuration information. When the terminal enters the inactive state, the multicast service configuration information for an inactive state included in the second configuration information is used to receive multicast service data.

Alternatively, in response to receiving the second configuration information, the terminal can directly clear the multicast service configuration information for an inactive state included in the first configuration information, and when the terminal enters the inactive state, the multicast service configuration information for an inactive state included in the second configuration information is used to receive multicast service data.

In another example, for a terminal storing first configuration information including multicast service configuration information for an inactive state sent through the public signaling, such as the SIB message and/or MCCH, when receiving second configuration information including multicast service configuration information for a connected state sent by a network side device through the dedicated signaling, such as the RRC release message carrying suspension configuration information and/or RRC reconfiguration message, the full configuration manner is adopted.

Specifically, in response to receiving the second configuration information, the terminal clears the first configuration information, and when entering the connected state, the terminal uses the multicast service information for a connected state included in the second configuration information to receive multicast service data.

Alternatively, the terminal clears the multicast service configuration information included in the first configuration information in response to receiving the second configuration information, since the multicast service configuration information included in the first configuration information only includes the multicast service configuration information for an inactive state at this time, the terminal clears the multicast service configuration information for an inactive state included in the first configuration information. When the terminal enters the connected state, it uses the multicast service information for a connected state included in the second configuration information to receive multicast service data.

Alternatively, the terminal directly clears the multicast service configuration information for an inactive state included in the first configuration information in response to receiving the second configuration information. When the terminal enters the connected state, it uses the multicast service information for a connected state included in the second configuration information to receive multicast service data.

In another example, for a terminal storing first configuration information including multicast service configuration information for an inactive state sent through the public signaling, such as the SIB message and/or MCCH, when receiving second configuration information including multicast service configuration information for an inactive state and multicast service configuration information for a connected state sent by a network side device through the dedicated signaling, such as the RRC release message carrying suspension configuration information and/or RRC reconfiguration message, the full configuration manner is adopted.

Specifically, the terminal clears the first configuration information in response to receiving the second configuration information, and when the terminal enters the connected state, the terminal uses the multicast service information for a connected state included in the second configuration information to receive multicast service data. When the terminal enters the inactive state, the multicast service information for an inactive state included in the second configuration information is used to receive multicast service data.

Alternatively, the terminal clears the multicast service configuration information included in the first configuration information in response to receiving the second configuration information, since the multicast service configuration information included in the first configuration information only includes the multicast service configuration information for an inactive state at this time, the terminal clears the multicast service configuration information for an inactive state included in the first configuration information. When the terminal enters the connected state, the multicast service information for a connected state included in the second configuration information is used to receive multicast service data. When the terminal enters the inactive state, the multicast service information for an inactive state included in the second configuration information is used to receive multicast service data.

Alternatively, in response to receiving the second configuration information, the terminal directly clears the multicast service configuration information for an inactive state included in the first configuration information, and when the terminal enters the connected state, the terminal uses the multicast service information for a connected state included in the second configuration information to receive multicast service data. When the terminal enters the inactive state, the multicast service information for an inactive state included in the second configuration information is used to receive multicast service data.

In some embodiments, the network side device sends the first configuration information to the terminal through the dedicated signaling, such as a radio resource control RRC release message carrying the suspension configuration information and/or an RRC reconfiguration message. The first configuration information may include but is not limited to multicast service configuration information. Specifically, it may include but is not limited to at least one of the multicast service configuration information for an inactive state and the multicast service configuration information for a connected state.

Then the network side device sends the second configuration information to the terminal through the public signaling, such as the SIB message and/or MCCH. The second configuration information adopts a full configuration manner. The second configuration information may include but is not limited to multicast service configuration information, specifically, it may include but is not limited to multicast service configuration information for an inactive state.

In an example, for a terminal storing first configuration information including multicast service configuration information for an inactive state sent through the dedicated signaling, such as the RRC release message carrying suspension configuration information and/or RRC reconfiguration message, when receiving second configuration information including multicast service configuration information for an inactive state sent by the network side device through the public signaling, such as the SIB message and/or MCCH, the full configuration manner is adopted.

Specifically, in response to receiving the second configuration information, the terminal clears the first configuration information, and after the terminal enters the inactive state, the multicast service configuration information for an inactive state included in the second configuration information is used to receive multicast service data.

Alternatively, in response to receiving the second configuration information, the terminal clears the multicast service configuration information included in the first configuration information, at this time, the first configuration information only includes the multicast service configuration information for an inactive state. Therefore, the terminal clears the multicast service configuration information for an inactive state included in the first configuration information, after the terminal enters the inactive state, the multicast service configuration information for an inactive state included in the second configuration information is used to receive multicast service data.

Alternatively, in response to receiving the second configuration information, the terminal directly clears the multicast service configuration information for an inactive state included in the first configuration information, after the terminal enters the inactive state, the multicast service configuration information for an inactive state included in the second configuration information is used to receive multicast service data.

In another example, for a terminal storing the first configuration information including the multicast service configuration for a connected state sent through a dedicated signaling, such as an RRC release message carrying the suspension configuration information and/or an RRC reconfiguration message, when receiving the second configuration information including the multicast service configuration information for an inactive state sent by the network side device through a public signaling, such as the SIB message and/or MCCH, the full configuration manner is adopted.

Specifically, the terminal clears the first configuration information in response to receiving the second configuration information, and after the terminal enters the inactive state, the multicast service configuration information for an inactive state included in the second configuration information is used to receive multicast service data.

Alternatively, the terminal clears the multicast service configuration information included in the first configuration information in response to receiving the second configuration information, at this time, the first configuration information only includes the multicast service configuration information for a connected state, so the terminal clears the multicast service configuration information for a connected state included in the first configuration information, after the terminal enters the inactive state, the multicast service configuration information for an inactive state included in the second configuration information is used to receive multicast service data.

Alternatively, the terminal clears the multicast service configuration information for an inactive state included in the first configuration information in response to receiving the second configuration information, since the first configuration information does not include the multicast service configuration information for an inactive state at this time, the terminal will not clear the first configuration information, further, after the terminal enters the inactive state, the multicast service configuration information for an inactive state included in the second configuration information is used to receive multicast service data.

In another example, for a terminal storing first configuration information including multicast service configuration information for an inactive state and connected state multicast service configuration sent through the dedicated signaling, such as an RRC release message carrying suspension configuration information and/or an RRC reconfiguration message, when receiving second configuration information including multicast service configuration information for an inactive state sent by a network side device through the public signaling, such as an SIB message and/or MCCH, the full configuration manner is adopted.

Specifically, in response to receiving the second configuration information, the terminal clears the first configuration information, and after the terminal enters the inactive state, the multicast service configuration information for an inactive state included in the second configuration information is used to receive multicast service data.

Alternatively, in response to receiving the second configuration information, the terminal clears the multicast service configuration information included in the first configuration information, at this time, the first configuration information includes the multicast service configuration information for an inactive state and the multicast service configuration information for a connected state, therefore, the terminal clears the multicast service configuration information for an inactive state and the multicast service configuration information for a connected state included in the first configuration information, after the terminal enters the inactive state, the multicast service configuration information for an inactive state included in the second configuration information is used to receive multicast service data.

Alternatively, in response to receiving the second configuration information, the terminal clears the multicast service configuration information for an inactive state included in the first configuration information, retains the multicast service configuration information for a connected state in the first configuration information, and further, after the terminal enters the inactive state, the multicast service configuration information for an inactive state included in the second configuration information is used to receive multicast service data.

The above is only an illustrative description. The first configuration information and the second configuration information may include other configuration information, which is not limited by the present disclosure. In addition, other schemes that configure the second configuration information using a full configuration manner should all fall within the protection scope of the present disclosure.

In the above embodiment, it may effectively avoid the problem of configuration failure occurring when a terminal combines stored configurations with configurations sent by an illegal network side device, and can also effectively avoid the problem of connections and configurations being lost due to a terminal failing to perform reconstruction and entering an idle state, thereby improving the security and reliability of sending configuration information.

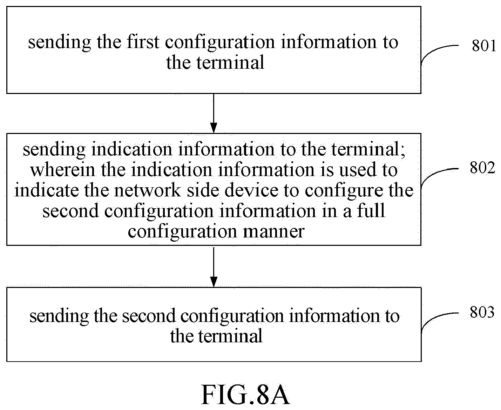

In some embodiments, referring to FIG. 8A, FIG. 8A is a flow chart of an information receiving method according to an embodiment, which can be executed by a network side device, and the network side device includes but is not limited to a base station, an access network device, etc., wherein the base station can be a 4G base station, a 5G base station or a future 6G base station, and the access network device can be a 4G access network device, a 5G access network device or a future 6G access network device, etc. The method may include the following steps.

In step 801, the first configuration information is sent to the terminal.

In the embodiment of the present disclosure, the terminal can be a smart phone, a desktop, a laptop, a personal assistant, etc., and the present disclosure does not limit this.

In an implementation, the first configuration information can include but is not limited to multicast service configuration information.

The specific implementation can be similar to step 601, which will not be repeated here.

In step 802, indication information is sent to the terminal; wherein the indication information is used to indicate that the network side device configures the second configuration information in a full configuration manner.

In an implementation, the network side device may send the indication information to the terminal by setting the full configuration (fullConfig) indicator as true, specifically including:

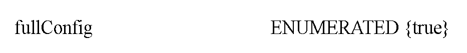

The above is only an illustrative description. In actual applications, the network side device may also send the indication information to the terminal in other manners, and the present disclosure does not limit this.

In the embodiment of the present disclosure, the full configuration manner specifically refers to that the network side device configures all the involved information contents for the information that needs to be configured.

It should be noted that the incremental configuration manner corresponds to the full configuration manner. The incremental configuration manner refers to that the network side device configures the update part based on the configured information. The update includes addition, deletion, modification, etc.

The network side device may also not send the indication information to the terminal, and the terminal defaults that the network side device configures the second configuration information in the full configuration manner at this time. Alternatively, the terminal determines to configure the second configuration information in the full configuration manner based on the protocol agreement. In step 803, the second configuration information is sent to the terminal.

The present disclosure does not limit the execution order of step 802 and step 803. They can be executed synchronously, or step 802 can be executed first and then step 803 is executed, or step 803 can be executed first and then step 802 is executed. The present disclosure does not limit this.

In an implementation, step 802 and step 803 can be executed synchronously, that is, the network side device synchronously sends the indication information to the terminal each time it sends the second configuration information to the terminal.

In an implementation, the second configuration information may include, but is not limited to, multicast service configuration information.

In an implementation, the full configuration manner can be used to indicate that the terminal clears, ignores or skips the first configuration information previously stored in response to receiving the second configuration information.

In another possible implementation, the full configuration manner can be used to indicate that the terminal clears, ignores or skips the multicast service configuration information in the first configuration information in response to receiving the second configuration information.

In another possible implementation, the full configuration manner can be used to indicate that the terminal clears, ignores or skips the multicast service configuration information for an inactive state in the first configuration information in response to receiving the second configuration information.

The implementation of step 803 is similar to the above-mentioned step 602 or 702, and will not be described in detail herein.

In the above-mentioned embodiment, the network side device can send indication information to the terminal, so that the terminal can determine that the second configuration information is configured in the full configuration manner according to the indication information, and perform the corresponding clearing operation, thereby improving the security and reliability of sending configuration information.

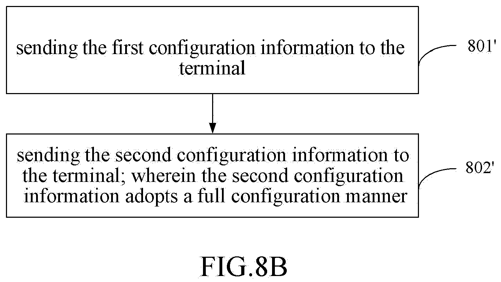

In some embodiments, referring to FIG. 8B, FIG. 8B is a flow chart of an information receiving method according to an embodiment, which can be executed by a network side device, and the network side device includes but is not limited to a base station, an access network device, etc., wherein the base station can be a 4G base station, a 5G base station or a future 6G base station, and the access network device can be a 4G access network device, a 5G access network device or a future 6G access network device, etc. The method may include the following steps.

In step 801', the first configuration information is sent to the terminal.

In the embodiment of the present disclosure, the terminal can be a smart phone, a desktop, a laptop, a personal assistant, etc., and the present disclosure does not limit this.

In an implementation, the first configuration information can include but is not limited to multicast service configuration information.

The specific implementation may be similar to step 601 and will not be repeated here.

In step 802', the second configuration information is sent to the terminal, wherein the second configuration information adopts a full configuration manner.

In the embodiment of the present disclosure, the terminal determines that the second configuration information adopts a full configuration manner based on the protocol agreement.

In an implementation, the second configuration information may include, but is not limited to, multicast service configuration information.

In the embodiment of the present disclosure, the full configuration manner specifically refers to that the network side device configures all the involved information contents for the information that needs to be configured.

The network side device may not send the indication information to the terminal, and the terminal defaults that the network side device configures the second configuration information in the full configuration manner at this time. Alternatively, the terminal determines to configure the second configuration information in the full configuration manner based on the protocol agreement.

In an implementation, the full configuration manner can be used to indicate that the terminal clears, ignores or skips the first configuration information previously stored in response to receiving the second configuration information.

In another possible implementation, the full configuration manner can be used to indicate that the terminal clears, ignores or skips the multicast service configuration information in the first configuration information in response to receiving the second configuration information.

In another possible implementation, the full configuration manner can be used to indicate that the terminal clears, ignores or skips the multicast service configuration information for an inactive state in the first configuration information in response to receiving the second configuration information.

It can be understood that when the terminal determines that the second configuration information adopts the full configuration manner based on the protocol agreement, even if the network side device sends other indication information indicating that the second configuration information adopts the incremental configuration manner, the terminal side should also determine that the second configuration information is configured in the full configuration manner based on the protocol agreement.

The implementation of step 802' is similar to the above-mentioned step 602 or 702, and will not be repeated here.

In the above-mentioned embodiment, the network side device does not need to send the indication information to the terminal, the terminal can directly determine that the second configuration information is configured in a full configuration manner based on the protocol agreement, and perform the corresponding clearing operation, thereby improving the security and reliability of sending the configuration information.

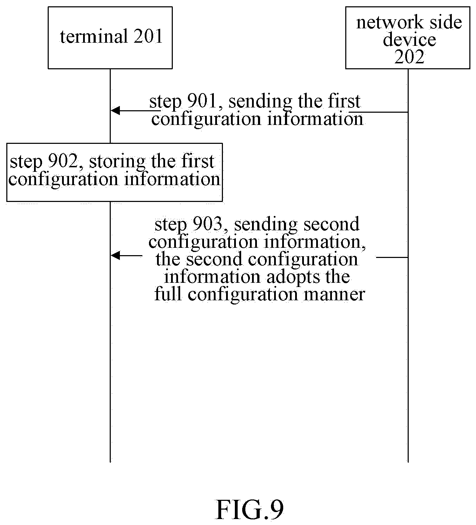

Referring to FIG. 9, FIG. 9 is a flow chart of an information receiving and information sending method according to an embodiment. The method can be applied to the network architecture shown in FIG. 2, and includes the following steps.

In step 901, the network side device 202 sends the first configuration information to the terminal 201.

In an implementation, the first configuration information may include but is not limited to multicast service configuration information.

In an implementation, when the terminal is in a connected state (also called an active state), an idle state or an inactive state, the terminal can receive the first configuration information sent by the network side device, wherein the first configuration information may include multicast service configuration information.

In an implementation, when the terminal is in a connected state (also called an active state), an idle state or an inactive state, the terminal receives the first configuration information sent by the network side device through the dedicated signaling, wherein the first configuration information may include multicast service configuration information. Optionally, the dedicated signaling may be the unicast signaling.

In an example, the dedicated signaling may be, for example, a radio resource control (RRC) release message or an RRC reconfiguration message.

In an example, the RRC release message may carry suspension configuration information. It should be noted that the suspension configuration information is different from the first configuration information. The suspension configuration information is used to configure the terminal to suspend the RRC connection with the network side device.

In an implementation, when the terminal is in a connected state (also called an active state), an idle state or an inactive state, the terminal receives first configuration information sent by a network side device through the dedicated signaling, wherein the first configuration information may include multicast service configuration information. Optionally, the dedicated signaling may be the unicast signaling.

The first configuration information may include but is not limited to multicast service configuration information for an inactive state and multicast service configuration information for a connected state.

In other possible implementations, when the terminal is in a connected state (also called an active state), an idle state or an inactive state, the terminal may receive first configuration information sent by a network side device through the public signaling. Optionally, the public signaling may be the broadcast signaling.

In an example, the public signaling may be, for example, a system information block (SIB) message; a multicast/broadcast services control channel MCCH.

In an implementation, when the terminal is in a connected state (also called an active state), an idle state or an inactive state, the terminal receives first configuration information sent by a network side device through a public signaling, wherein the first configuration information may include multicast service configuration information. In an implementation, when the terminal is in a connected state (also called an active state), an idle state or an inactive state, the first configuration information sent by the network side device through the public signaling is received, wherein the public signaling may be, for example, at least one of the SIB message and MCCH.

In an implementation, when the terminal is in a connected state (also called an active state), an idle state or an inactive state, the first configuration information sent by the network side device through the public signaling is received, wherein the public signaling may be, for example, at least one of the SIB message and MCCH.

The first configuration information may include, but is not limited to, multicast service configuration information for an inactive state.

In step 902, the terminal 201 stores the first configuration information.

In step 903, the network side device 202 sends second configuration information to the terminal 201.

Optionally, the network side device 202 may also send indication information to the terminal 201, wherein the indication information is used to indicate that the network side device configures the second configuration information in the full configuration manner. The specific implementation is similar to step 502 and will not be repeated here.

In an implementation, the second configuration information may include, but is not limited to, multicast service configuration information. In an example, the second configuration information is used to update the configuration information used by the terminal.

In the embodiment of the present disclosure, the second configuration information adopts a full configuration manner.

In the embodiment of the present disclosure, the full configuration manner specifically refers to that the network side device configures all the involved information contents for the information that needs to be configured.

It should be noted that the incremental configuration manner corresponds to the full configuration manner. The incremental configuration manner refers to that the network side device configures the update part based on the configured information. The update includes addition, deletion, modification, etc.

In an implementation, the full configuration manner can be used to indicate that the terminal clears the previously stored first configuration information in response to receiving the second configuration information. Alternatively, the full configuration manner can be used to indicate that the terminal ignores or skips the first configuration information in response to receiving the second configuration information.

The present disclosure does not limit the specific information content included in the first configuration information, that is, regardless of whether the first configuration information includes multicast service configuration, the terminal can clear, ignore or skip the first configuration information when receiving the second configuration information.

The network side device can adopt the full configuration manner for the configuration information of a plurality of services, including but not limited to multicast services, unicast services, etc. Correspondingly, for the terminal storing the first configuration information, when receiving the second configuration information sent by the network side device, it can be processed according to the full configuration processing procedure, that is, the previously stored first configuration information can be cleared, and then the second configuration information can be used to receive the corresponding service data. In another possible implementation, the full configuration manner can be used to indicate that the terminal clears the multicast service configuration information in the first configuration information in response to receiving the second configuration information. Alternatively, the full configuration manner may be used to indicate that the terminal ignores or skips the multicast service configuration information in the first configuration information in response to receiving the second configuration information.

If the first configuration information does not include the multicast service configuration information, it is not necessary to perform operations of clearing, ignoring, or skipping on the first configuration information.

The network side device can adopt the full configuration manner only for the multicast service configuration information. Correspondingly, for the terminal storing the first configuration information including the multicast service configuration information, when receiving the second configuration information including the multicast service configuration information sent by the network side device, only the multicast service configuration information in the first configuration information previously stored can be cleared, and other service configuration information in the first configuration information can be retained, such as retaining the unicast service configuration information, and then the multicast service configuration information included in the second configuration information can be used to receive the multicast service data. The multicast service configuration information included in the second configuration information is the complete multicast service configuration information updated by the network side device.

In another possible implementation, the full configuration manner can be used to indicate that the terminal clears the multicast service configuration information for an inactive state in the first configuration information in response to receiving the second configuration information. Alternatively, the full configuration manner can be used to indicate that the terminal ignores or skips the multicast service configuration information for an inactive state in the first configuration information in response to receiving the second configuration information.

If the first configuration information does not include the multicast service configuration information for an inactive state, it is not necessary to perform operations of clearing, ignoring, or skipping on the first configuration information.

The network side device can adopt the full configuration manner only for the multicast service configuration information for an inactive state. Correspondingly, for the terminal storing the first configuration information including the multicast service configuration information, when receiving the second configuration information including the multicast service configuration information for an inactive state sent by the network side device, the multicast service configuration information for an inactive state in the first configuration information previously stored can be cleared, and other service configuration information in the first configuration information can be retained, such as retaining the unicast service configuration information and the multicast service configuration information for a connected state or the like, and then when the terminal enters the inactive state, the multicast service configuration information for an inactive state included in the second configuration information is used to receive the multicast service data. The multicast service configuration information for an inactive state included in the second configuration information is the complete multicast service configuration information for the inactive terminal after being updated by the network side device.

In an implementation, when the terminal is in the connected state (also called an active state), the idle state or the inactive state, the second configuration information sent by the network side device is received, wherein the second configuration information carries the multicast service configuration information.

In an implementation, when the terminal is in a connected state (also called an active state), an idle state or an inactive state, the second configuration information sent by the network side device through the public signaling is received, wherein the second configuration information carries the multicast service configuration information.

In one implementation, the public signaling may be, for example, at least one of the SIB message and MCCH.

In other possible implementations, when the terminal is in a connected state (also called an active state), an idle state or an inactive state, the second configuration information sent by the network side device through the dedicated signaling is received.

In one example, the dedicated signaling may be, for example, an RRC release message or an RRC reconfiguration message.

In one example, the RRC release message may carry the suspension configuration information. It should be noted that the suspension configuration information is different from the second configuration information. The suspension configuration information is used to configure the terminal to suspend the RRC connection with the network side device.

It should be noted that the type of the second signaling may be different from the type of the first signaling. That is, when the first signaling adopts the public signaling, the second signaling is the dedicated signaling, and when the first signaling adopts the dedicated signaling, the second signaling is the public signaling. The type of the second signaling may also be the same as the type of the first signaling, for example, both the second signaling and the first signaling are dedicated signalings or public signalings, which is not limited in the present disclosure.

In the above embodiment, the terminal may receive the first configuration information sent by the network side device, and then, with the first configuration information stored, receive the second configuration information sent by the network side device. The second configuration information is configured in a full configuration manner, thereby avoiding the problem of configuration failure occurring when a terminal combines stored configurations with configurations sent by an illegal network side device, and can also avoid the problem of connections and configurations being lost due to a terminal failing to perform reconstruction and entering an idle state, thereby improving the security and reliability of sending configuration information.

Corresponding to the above-mentioned application function implementation method embodiment, the present disclosure also provides an embodiment of the application function implementation apparatus.

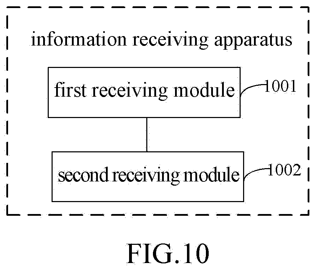

Referring to FIG. 10, FIG. 10 is a block diagram of an information receiving apparatus according to an example embodiment, and the apparatus is applied to a terminal, including:
a first receiving module 1001, configured to receive first configuration information sent by a network side device; and
a second receiving module 1002, configured to receive second configuration information sent by the network side device, wherein the second configuration information adopts a full configuration manner.

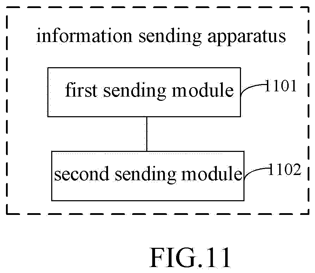

Referring to FIG. 11, FIG. 11 is a block diagram of an information sending apparatus according to an example embodiment, the apparatus is applied to a network side device, and includes:
a first sending module 1101, configured to send first configuration information to a terminal; and
a second sending module 1102, configured to send second configuration information to the terminal, wherein the second configuration information adopts a full configuration manner.

For the apparatus embodiments, since they basically corresponds to the method embodiments, the relevant parts can refer to the partial description of the method embodiments. The apparatus embodiments described above are only schematic, wherein the units described as separate components may or may not be physically separated, and the components displayed as units may or may not be physical units, that is, they may be located in one place, or they may be distributed on a plurality of network units. Some or all of the modules may be selected according to actual needs to achieve the purpose of the solution of the present disclosure. Ordinary technicians in this field can understand and implement them without creative work.

Correspondingly, the present disclosure also provides a computer-readable storage medium, wherein the storage medium stores a computer program, and the computer program is used to execute any of the information receiving methods described above on the terminal side.

Correspondingly, the present disclosure also provides a computer-readable storage medium, wherein the storage medium stores a computer program, and the computer program is used to execute any of the information sending methods described above on the network side device side.

Correspondingly, the present disclosure also provides an information receiving apparatus, including:
a processor; and
a memory for storing instructions executable by the processor;
wherein the processor is configured to execute any of the information receiving methods described above on the terminal side.

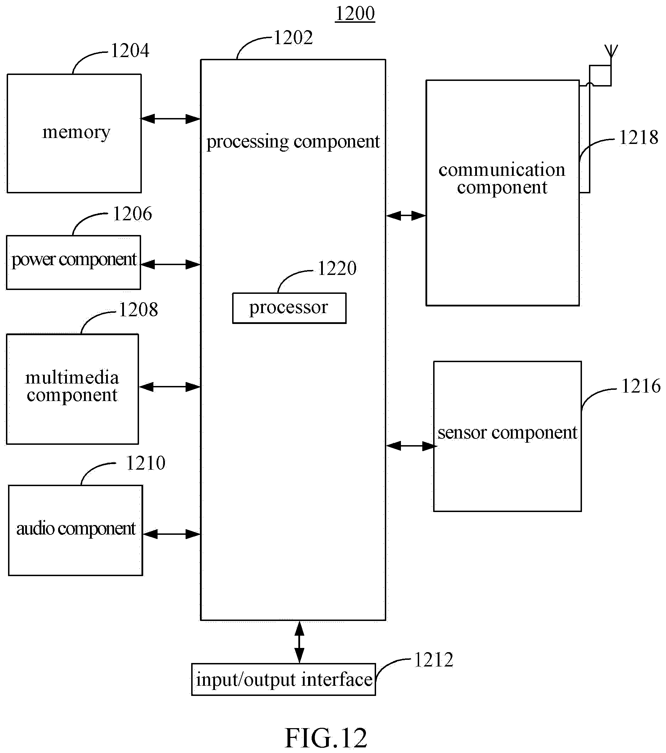

FIG. 12 is a block diagram of an information receiving apparatus 1200 according to an example embodiment. For example, the apparatus 1200 may be a terminal such as a mobile phone, a tablet computer, an e-book reader, a multimedia playback device, a wearable device, a vehicle-mounted user device, an ipad, a smart TV, etc.

Referring to FIG. 12, the apparatus 1200 may include at least one or more of the following components: a processing component 1202, a memory 1204, a power component 1206, a multimedia component 1208, an audio component 1210, an input/output (I/O) interface 1212, a sensor component 1216, and a communication component 1218.

The processing component 1202 typically controls the overall operations of the apparatus 1200, such as the operations associated with display, telephone calls, data random access, camera operations, and recording operations. The processing component 1202 can include one or more processors 1220 to execute instructions to perform all or part of the steps in the above described information receiving methods. Moreover, the processing component 1202 can include one or more modules to facilitate the interaction between the processing component 1202 and other components. For example, the processing component 1202 can include a multimedia module to facilitate the interaction between the multimedia component 1208 and the processing component 1202. For example, the processing component 1202 may read the executable instructions from the memory to realize the steps of the information receiving methods provided by the above embodiments.

The memory 1204 is configured to store various types of data to support the operation of the apparatus 1200. Examples of such data include instructions for any application or method operated on the apparatus 1200, the contact data, the phone book data, messages, pictures, videos, and the like. The memory 1204 can be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 can include a power management system, one or more power sources, and other components associated with the generation, management, and distribution of power for the apparatus 1200.

The multimedia component 1208 includes a display screen providing an output interface between the apparatus 1200 and the user. In some embodiments, the multimedia component 1208 includes a front camera and/or a rear camera. When the apparatus 1200 is in an operation mode, such as a photographing mode or a video mode, the front camera and/or the rear camera can receive external multimedia data. Each of the front camera and the rear camera may be a fixed optical lens system or have focus and optical zoom capability.

The audio component 1210 is configured to output and/or input an audio signal. For example, the audio component 1210 includes a microphone (MIC) configured to receive an external audio signal when the apparatus 1200 is in an operation mode, such as a call mode, a recording mode, and a voice recognition mode. The received audio signal may be further stored in the memory 1204 or sent via the communication component 1218. In some embodiments, the audio component 1210 also includes a speaker for outputting the audio signal.

The I/O interface 1212 provides an interface between the processing component 1202 and peripheral interface modules, such as keyboards, a click wheels, buttons, and the like. These buttons may include, but not limited to, a home button, a volume button, a starting button, and a locking button.

The sensor component 1216 includes one or more sensors for providing state assessments of various aspects of the apparatus 1200. For example, the sensor component 1216 can detect an open/closed state of the apparatus 1200, relative positioning of components, such as the display and the keypad of the apparatus 1200. The sensor component 1216 can also detect a change in position of one component of the apparatus 1200 or the apparatus 1200, the presence or absence of user contact with the apparatus 1200, an orientation, or an acceleration/deceleration of the apparatus 1200, and a change in temperature of the apparatus 1200. The sensor component 1216 can also include a proximity sensor configured to detect the presence of nearby objects without any physical contact. The sensor component 1216 can also include a light sensor, such as a CMOS or CCD image sensor, configured to use in imaging applications. In some embodiments, the sensor component 1216 can also include an accelerometer sensor, a gyroscope sensor, a magnetic sensor, a pressure sensor, or a temperature sensor.

The communication component 1218 is configured to facilitate wired or wireless communication between the apparatus 1200 and other devices. The apparatus 1200 can access a wireless network based on a communication standard, such as Wi-Fi, 2G, 3G, 4G, 5G, or 6G, or a combination thereof. In an example embodiment, the communication component 1218 receives broadcast signals or broadcast associated information from an external broadcast management system via a broadcast channel. In an example embodiment, the communication component 1218 also includes a near field communication (NFC) module to facilitate short-range communications. For example, the NFC module can be implemented based on radio frequency identification (RFID) technology, infrared data association (IrDA) technology, ultra-wideband (UWB) technology, Bluetooth (BT) technology and other technologies.

In an example embodiment, the apparatus 1200 may be implemented with one or more application specific integrated circuits (ASIC), digital signal processors (DSP), digital signal processing devices (DSPD), programmable logic devices (PLD), field programmable Gate arrays (FPGA), controllers, microcontrollers, microprocessors or other electronic components, to perform any of the above information receiving methods on the terminal side.

In an example embodiment, a non-transitory computer-readable storage medium including instructions is also provided, such as a memory 1204 including instructions, and the above instructions can be executed by the processor 1220 of the apparatus 1200 to complete the above information receiving method. For example, the non-transitory computer-readable storage medium can be a ROM, a random access memory (RAM), a CD-ROM, a magnetic tape, a floppy disk, and an optical data storage device.

In an example embodiment, a non-transitory machine-readable storage medium including instructions is also provided, such as a memory 1004 including instructions, and the above instructions can be executed by a processor 1020 of the apparatus 1000 to complete the above-mentioned information receiving method. For example, the non-transitory computer-readable storage medium may be a ROM, a random access memory (RAM), a CD-ROM, a tape, a floppy disk, and an optical data storage device.

Correspondingly, the present disclosure also provides an information sending apparatus, including:
a processor; and
a memory for storing instructions executable by the processor;
wherein, the processor is configured to execute any of the above information sending methods on the side of the network side device.

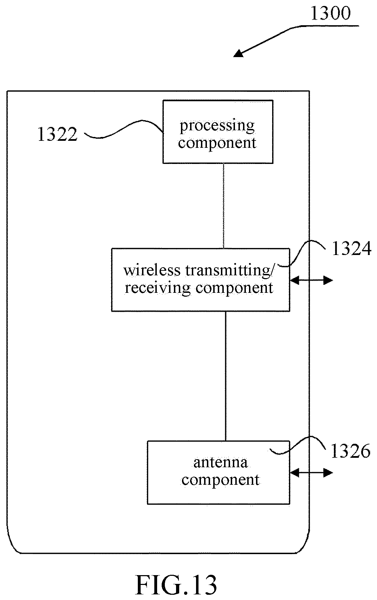

As shown in FIG. 13, FIG. 13 is a structural schematic diagram of an information sending apparatus 1300 according to an example embodiment. The apparatus 1300 can be provided as a network side device. Referring to FIG. 13, the apparatus 1300 includes a processing component 1322, a wireless transmitting/receiving component 1324, an antenna component 1326, and a signal processing part specific to the wireless interface, and the processing component 1322 can further include at least one processor.

One of the processors in the processing component 1322 can be configured to execute any of the information sending methods described above.

## Claims

1. An information receiving method, performed by a terminal, and the method comprising:
receiving (301, 501, 501') first configuration information sent by a network side device; and
receiving (302, 503, 503') second configuration information sent by the network side device,
**characterized in that** the second configuration information uses a full configuration manner, the full configuration manner is used to indicate the terminal clearing the first configuration information, multicast service configuration information in the first configuration information, or multicast service configuration information for an inactive state in the first configuration information, in response to receiving the second configuration information.

2. The method according to claim 1, wherein the first configuration information comprises multicast service configuration information; and/or
the second configuration information comprises multicast service configuration information.

3. The method according to claim 1 or 2, wherein receiving (301, 501, 501') first configuration information sent by the network side device comprises:
receiving (401) the first configuration information sent by the network side device through a first signaling;
wherein receiving (302, 503, 503') second configuration information sent by the network side device comprises:
receiving (402) the second configuration information sent by the network side device through a second signaling;
wherein a type of the second signaling is different from a type of the first signaling,
the first signaling is a public signaling, and the second signaling is a dedicated signaling; or
the first signaling is a dedicated signaling, and the second signaling is a public signaling,
the public signaling comprises at least one of the following:
a system information block, SIB, message;
a multicast/broadcast services control channel, MCCH.

4. The method according to claim 3, wherein the dedicated signaling comprises at least one of the following:
a radio resource control, RRC, release message;
an RRC reconfiguration message,
wherein the RRC release message carries suspension configuration information.

5. The method according to any one of claims 2-4, wherein multicast service configuration information sent by the network side device through a public signaling comprises multicast service configuration information for an inactive state; and/or
multicast service configuration information sent by the network side device through a dedicated signaling comprises at least one of multicast service configuration information for an inactive state and multicast service configuration information for a connected state.

6. The method according to any one of claims 1-5, further comprising:
receiving (502) indication information sent by the network side device; wherein the indication information is used to indicate the network side device configuring the second configuration information by using the full configuration manner.

7. The method according to any one of claims 1-5, further comprising:
determining (502') that the second configuration information uses the full configuration manner based on protocol agreement.

8. An information sending method, performed by a network side device, and the method comprising:
sending (601, 801, 801') first configuration information to a terminal; and
sending (602, 803, 802') second configuration information to the terminal;
**characterized in that** the second configuration information uses a full configuration manner, the full configuration manner is used to indicate the terminal clearing the first configuration information, multicast service configuration information in the first configuration information, or multicast service configuration information for an inactive state in the first configuration information, in response to receiving the second configuration information.

9. The method according to claim 8, wherein the first configuration information comprises multicast service configuration information; and/or
the second configuration information comprises multicast service configuration information.

10. The method according to claim 8 or 9, wherein sending (601, 801, 801') the first configuration information to the terminal comprises:
sending (701) the first configuration information to the terminal through a first signaling;
wherein sending (602, 803, 802') the second configuration information to the terminal comprises:
sending (702) the second configuration information to the terminal through a second signaling;
wherein a type of the second signaling is different from a type of the first signaling;
the first signaling is a public signaling, and the second signaling is a dedicated signaling; or
the first signaling is a dedicated signaling, and the second signaling is a public signaling;
the public signaling comprises at least one of the following:
a system information block, SIB, message;
a multicast/broadcast services control channel, MCCH.

11. The method according to claim 10, wherein the dedicated signaling comprises at least one of the following:
a radio resource control, RRC, release message;
an RRC reconfiguration message;
wherein the RRC release message carries suspension configuration information.

12. The method according to any one of claims 9-11, wherein multicast service configuration information sent by the network side device through a public signaling comprises multicast service configuration information for an inactive state; and/or
multicast service configuration information sent by the network side device through a dedicated signaling comprises at least one of multicast service configuration information for an inactive state and multicast service configuration information for a connected state.

13. The method according to any one of claims 9-11, further comprising:
sending (802) indication information to the terminal; wherein the indication information is used to indicate the network side device configuring the second configuration information by using the full configuration manner.

14. An information receiving apparatus, applied to a terminal, and the apparatus configured to execute the information receiving method according to any one of claims 1-7.

15. An information sending apparatus, applied to a network side device, and the apparatus configured to execute the information sending method according to any one of claims 8-13.

## Patentansprüche

1. Ein Informationsempfangsverfahren, durchgeführt von einem Endgerät, wobei das Verfahren umfasst: Empfangen (301, 501, 501') erster Konfigurationsinformationen, die von einer netzwerkseitigen Vorrichtung gesendet werden; und Empfangen (302, 503, 503') zweiter Konfigurationsinformationen, die von der netzwerkseitigen Vorrichtung gesendet werden, **dadurch gekennzeichnet, dass** die zweiten Konfigurationsinformationen eine Vollkonfigurationsweise verwenden, die Vollkonfigurationsweise verwendet wird, um anzuzeigen bzw. zu veranlassen, dass das Endgerät die ersten Konfigurationsinformationen, Multicast-Dienstkonfigurationsinformationen in den ersten Konfigurationsinformationen oder Multicast-Dienstkonfigurationsinformationen für einen inaktiven Zustand in den ersten Konfigurationsinformationen als Reaktion auf den Empfang der zweiten Konfigurationsinformationen löscht.

2. Das Verfahren nach Anspruch 1, wobei die ersten Konfigurationsinformationen Multicast-Dienstkonfigurationsinformationen umfassen; und/oder die zweiten Konfigurationsinformationen Multicast-Dienstkonfigurationsinformationen umfassen.

3. Das Verfahren nach Anspruch 1 oder 2, wobei das Empfangen (301, 501, 501') der ersten Konfigurationsinformationen, die von der netzwerkseitigen Vorrichtung gesendet werden, umfasst: Empfangen (401) der ersten Konfigurationsinformationen, die von der netzwerkseitigen Vorrichtung über eine erste Signalisierung gesendet werden;
wobei das Empfangen (302, 503, 503') der zweiten Konfigurationsinformationen, die von der netzwerkseitigen Vorrichtung gesendet werden, umfasst: Empfangen (402) der zweiten Konfigurationsinformationen, die von der netzwerkseitigen Vorrichtung über eine zweite Signalisierung gesendet werden;
wobei sich ein Typ der zweiten Signalisierung von einem Typ der ersten Signalisierung unterscheidet,
die erste Signalisierung eine öffentliche Signalisierung ist, und die zweite Signalisierung eine dedizierte Signalisierung ist;
oder die erste Signalisierung eine dedizierte Signalisierung ist, und die zweite Signalisierung eine öffentliche Signalisierung ist,
die öffentliche Signalisierung mindestens eines der Folgenden umfasst:
einen Systeminformationsblock, SIB, -Nachricht;
einen Multicast/Broadcast-Dienste-Steuerkanal, MCCH.

4. Das Verfahren nach Anspruch 3, wobei die dedizierte Signalisierung mindestens eines der Folgenden umfasst:
eine Funkressourcensteuerungs, RRC, -Freigabenachricht; eine RRC-Rekonfigurationsnachricht, wobei die RRC-Freigabenachricht Suspendierungskonfigurationsinformationen trägt.

5. Das Verfahren nach einem der Ansprüche 2-4, wobei von der netzwerkseitigen Vorrichtung über eine öffentliche Signalisierung gesendete Multicast-Dienstkonfigurationsinformationen Multicast-Dienstkonfigurationsinformationen für einen inaktiven Zustand umfassen; und/oder von der netzwerkseitigen Vorrichtung über eine dedizierte Signalisierung gesendete Multicast-Dienstkonfigurationsinformationen mindestens eines von Multicast-Dienstkonfigurationsinformationen für einen inaktiven Zustand und Multicast-Dienstkonfigurationsinformationen für einen verbundenen Zustand umfassen.

6. Das Verfahren nach einem der Ansprüche 1-5, ferner umfassend: Empfangen (502) von Anzeigeinformationen, die von der netzwerkseitigen Vorrichtung gesendet werden; wobei die Anzeigeinformationen verwendet werden, um anzuzeigen, dass die netzwerkseitige Vorrichtung die zweiten Konfigurationsinformationen unter Verwendung der Vollkonfigurationsweise konfiguriert.

7. Das Verfahren nach einem der Ansprüche 1-5, ferner umfassend: Bestimmen (502'), dass die zweiten Konfigurationsinformationen die Vollkonfigurationsweise basierend auf einer Protokollvereinbarung verwenden.

8. Ein Informationssendeverfahren, durchgeführt von einer netzwerkseitigen Vorrichtung, wobei das Verfahren umfasst:
Senden (601, 801, 801') erster Konfigurationsinformationen an ein Endgerät; und
Senden (602, 803, 802') zweiter Konfigurationsinformationen an das Endgerät;
**dadurch gekennzeichnet, dass** die zweiten Konfigurationsinformationen eine Vollkonfigurationsweise verwenden, die Vollkonfigurationsweise verwendet wird, um anzuzeigen bzw. zu veranlassen, dass das Endgerät die ersten Konfigurationsinformationen, Multicast-Dienstkonfigurationsinformationen in den ersten Konfigurationsinformationen oder Multicast-Dienstkonfigurationsinformationen für einen inaktiven Zustand in den ersten Konfigurationsinformationen als Reaktion auf den Empfang der zweiten Konfigurationsinformationen löscht.

9. Das Verfahren nach Anspruch 8, wobei die ersten Konfigurationsinformationen Multicast-Dienstkonfigurationsinformationen umfassen; und/oder
die zweiten Konfigurationsinformationen Multicast-Dienstkonfigurationsinformationen umfassen.

10. Das Verfahren nach Anspruch 8 oder 9, wobei das Senden (601, 801, 801') der ersten Konfigurationsinformationen an das Endgerät umfasst:
Senden (701) der ersten Konfigurationsinformationen an das Endgerät über eine erste Signalisierung;
wobei das Senden (602, 803, 802') der zweiten Konfigurationsinformationen an das Endgerät umfasst:
Senden (702) der zweiten Konfigurationsinformationen an das Endgerät über eine zweite Signalisierung;
wobei sich ein Typ der zweiten Signalisierung von einem Typ der ersten Signalisierung unterscheidet;
die erste Signalisierung ist eine öffentliche Signalisierung, und die zweite Signalisierung ist eine dedizierte Signalisierung;
oder die erste Signalisierung ist eine dedizierte Signalisierung, und die zweite Signalisierung ist eine öffentliche Signalisierung;
wobei die öffentliche Signalisierung mindestens eines der Folgenden: eine Systeminformationsblock, SIB, -Nachricht; einen Multicast/Broadcast-Dienste-Steuerkanal, MCCH.

11. Das Verfahren nach Anspruch 10, wobei die dedizierte Signalisierung mindestens eines der Folgenden umfasst:
eine Funkressourcensteuerung, RRC, -Freigabenachricht; eine RRC-Rekonfigurationsnachricht; wobei die RRC-Freigabenachricht Suspendierungskonfigurationsinformationen trägt.

12. Das Verfahren nach einem der Ansprüche 9-11, wobei von der netzwerkseitigen Vorrichtung über eine öffentliche Signalisierung gesendete Multicast-Dienstkonfigurationsinformationen Multicast-Dienstkonfigurationsinformationen für einen inaktiven Zustand umfassen; und/oder
von der netzwerkseitigen Vorrichtung über eine dedizierte Signalisierung gesendete Multicast-Dienstkonfigurationsinformationen mindestens eines von Multicast-Dienstkonfigurationsinformationen für einen inaktiven Zustand und Multicast-Dienstkonfigurationsinformationen für einen verbundenen Zustand umfassen.

13. Das Verfahren nach einem der Ansprüche 9-11, ferner umfassend: Senden (802) von Anzeigeinformationen an das Endgerät; wobei die Anzeigeinformationen verwendet werden, um anzuzeigen, dass die netzwerkseitige Vorrichtung die zweiten Konfigurationsinformationen unter Verwendung der Vollkonfigurationsweise konfiguriert.

14. Eine Informationsempfangsvorrichtung, angewendet auf ein Endgerät, wobei die Vorrichtung konfiguriert ist, das Informationsempfangsverfahren nach einem der Ansprüche 1-7 auszuführen.

15. Eine Informationssendevorrichtung, angewendet auf eine netzwerkseitige Vorrichtung, wobei die Vorrichtung konfiguriert ist, das Informationssendeverfahren nach einem der Ansprüche 8-13 auszuführen.

## Revendications

1. Procédé de réception d'informations, exécuté par un terminal, le procédé comprenant :
la réception (301, 501, 501') de premières informations de configuration envoyées par un dispositif côté réseau ; et
la réception (302, 503, 503') de deuxièmes informations de configuration envoyées par le dispositif côté réseau,
**caractérisé en ce que** les deuxièmes informations de configuration utilisent un mode de configuration complète, le mode de configuration complète étant utilisé pour indiquer au terminal de supprimer les premières informations de configuration, les informations de configuration de service multicast dans les premières informations de configuration, ou les informations de configuration de service multicast pour un état inactif dans les premières informations de configuration, en réponse à la réception des deuxièmes informations de configuration.

2. Procédé selon la revendication 1, dans lequel les premières informations de configuration comprennent des informations de configuration de service multicast ; et/ou les deuxièmes informations de configuration comprennent des informations de configuration de service multicast.

3. Procédé selon la revendication 1 ou 2, dans lequel la réception (301, 501, 501') des premières informations de configuration envoyées par le dispositif côté réseau comprend :
la réception (401) des premières informations de configuration envoyées par le dispositif côté réseau via une première signalisation ;
dans lequel la réception (302, 503, 503') des deuxièmes informations de configuration envoyées par le dispositif côté réseau comprend :
la réception (402) des deuxièmes informations de configuration envoyées par le dispositif côté réseau via une deuxième signalisation ;
dans lequel un type de la deuxième signalisation est différent d'un type de la première signalisation,
la première signalisation est une signalisation publique, et la deuxième signalisation est une signalisation dédiée ; ou
la première signalisation est une signalisation dédiée, et la deuxième signalisation est une signalisation publique,
la signalisation publique comprend au moins l'un des éléments suivants :
un message de bloc d'informations système, SIB ;
une voie de contrôle de services multicast/diffusion, MCCH.

4. Procédé selon la revendication 3, dans lequel la signalisation dédiée comprend au moins l'un des éléments suivants :
un message de libération de contrôle des ressources radio, RRC ;
un message de reconfiguration RRC,
dans lequel le message de libération RRC transporte des informations de configuration de suspension.

5. Procédé selon l'une quelconque des revendications 2 à 4, dans lequel les informations de configuration de service multicast envoyées par le dispositif côté réseau via une signalisation publique comprennent des informations de configuration de service multicast pour un état inactif ; et/ou
les informations de configuration de service multicast envoyées par le dispositif côté réseau via une signalisation dédiée comprennent au moins l'une des informations de configuration de service multicast pour un état inactif et des informations de configuration de service multicast pour un état connecté.

6. Procédé selon l'une quelconque des revendications 1 à 5, comprenant en outre :
la réception (502) d'informations d'indication envoyées par le dispositif côté réseau ; dans lequel les informations d'indication sont utilisées pour indiquer que le dispositif côté réseau configure les deuxièmes informations de configuration en utilisant le mode de configuration complète.

7. Procédé selon l'une quelconque des revendications 1 à 5, comprenant en outre : la détermination (502') que les deuxièmes informations de configuration utilisent le mode de configuration complète sur la base d'un accord de protocole.

8. Procédé d'envoi d'informations, exécuté par un dispositif côté réseau, le procédé comprenant :
l'envoi (601, 801, 801') de premières informations de configuration à un terminal ; et
l'envoi (602, 803, 802') de deuxièmes informations de configuration au terminal ;
**caractérisé en ce que** les deuxièmes informations de configuration utilisent un mode de configuration complète, le mode de configuration complète étant utilisé pour indiquer au terminal de supprimer les premières informations de configuration, les informations de configuration de service multicast dans les premières informations de configuration, ou les informations de configuration de service multicast pour un état inactif dans les premières informations de configuration, en réponse à la réception des deuxièmes informations de configuration.

9. Procédé selon la revendication 8, dans lequel les premières informations de configuration comprennent des informations de configuration de service multicast ; et/ou les deuxièmes informations de configuration comprennent des informations de configuration de service multicast.

10. Procédé selon la revendication 8 ou 9, dans lequel l'envoi (601, 801, 801') des premières informations de configuration au terminal comprend :
l'envoi (701) des premières informations de configuration au terminal via une première signalisation ;
dans lequel l'envoi (602, 803, 802') des deuxièmes informations de configuration au terminal comprend :
l'envoi (702) des deuxièmes informations de configuration au terminal via une deuxième signalisation ;
dans lequel un type de la deuxième signalisation est différent d'un type de la première signalisation ;
la première signalisation est une signalisation publique, et la deuxième signalisation est une signalisation dédiée ; ou
la première signalisation est une signalisation dédiée, et la deuxième signalisation est une signalisation publique ;
la signalisation publique comprend au moins l'un des éléments suivants :
un message de bloc d'informations système, SIB ;
une voie de contrôle de services multicast/diffusion, MCCH.

11. Procédé selon la revendication 10, dans lequel la signalisation dédiée comprend au moins l'un des éléments suivants :
un message de libération de contrôle des ressources radio, RRC ;
un message de reconfiguration RRC ;
dans lequel le message de libération RRC transporte des informations de configuration de suspension.

12. Procédé selon l'une quelconque des revendications 9 à 11, dans lequel les informations de configuration de service multicast envoyées par le dispositif côté réseau via une signalisation publique comprennent des informations de configuration de service multicast pour un état inactif ; et/ou
les informations de configuration de service multicast envoyées par le dispositif côté réseau via une signalisation dédiée comprennent au moins l'une des informations de configuration de service multicast pour un état inactif et des informations de configuration de service multicast pour un état connecté.

13. Procédé selon l'une quelconque des revendications 9 à 11, comprenant en outre : l'envoi (802) d'informations d'indication au terminal ; dans lequel les informations d'indication sont utilisées pour indiquer que le dispositif côté réseau configure les deuxièmes informations de configuration en utilisant le mode de configuration complète.

14. Dispositif de réception d'informations, appliqué à un terminal, le dispositif étant configuré pour exécuter le procédé de réception d'informations selon l'une quelconque des revendications 1 à 7.

15. Dispositif d'envoi d'informations, appliqué à un dispositif côté réseau, le dispositif étant configuré pour exécuter le procédé d'envoi d'informations selon l'une quelconque des revendications 8 à 13.
